# EUROPÄISCHE PATENTANMELDUNG

(11) **EP 3 082 292 A1**
(43) Veröffentlichungstag der Anmeldung: **19.10.2016**
(21) Anmeldenummer: 16165315.9
(22) Anmeldetag: 14.04.2016
(51) Int. Cl.: H04L 9/32, G06F 21/32

(54) **DIGITALE SIGNATUR MIT FERN-IDENTIFIZIERUNG**

(30) Priorität: 14.04.2015 DE 102015206623
(71) Anmelder: IDnow GmbH, 80333 München (DE)
(72) Erfinder: VON FERENCZY, Dennis, 80469 München (DE); BAUER, Armin, 80803 München (DE)
(74) Vertreter: Kraus & Weisert Patentanwälte PartGmbB

(57) **Zusammenfassung**

Es werden Bilddaten von einem Endgerät (110) empfangen, die ein Identifizierungs-Dokument mit einem Lichtbild abbilden. Identifizierungsinformation wird basierend auf den Bilddaten validiert. Ein zu signierendes Dokument (150) wird bereitgestellt. Eine digitale Signatur (161) des zu signierenden Dokuments (150) wird basierend auf der validierten Identifizierungsinformation ausgelöst.

## Beschreibung

### TECHNISCHES GEBIET

Die Erfindung betrifft Techniken, um ein Dokument digital zu signieren. In verschiedenen Ausführungsformen wird das Dokument basierend auf validierter Identifizierungsinformation eines Benutzers auf einem Server digital signiert.

### HINTERGRUND

Dokumente müssen oft sicher und rechtsgültig unterschrieben werden. Herkömmliche handschriftliche Unterschriften werden immer häufiger durch sogenannte elektronische oder digitale Signaturen ersetzt. Im Allgemeinen werden verschiedene Anforderungen an die digitale Signatur gestellt, so wie zum Beispiel Rechtsgültigkeit, Beweiskraft der digitalen Signatur oder zuverlässige Feststellung der Identität des Unterschreibenden.

Verschiedene Systeme erfordern zur zuverlässigen Feststellung der Identität des unterschreibenden den Einsatz von elektronischen Geräten, wie zum Beispiel einer Smartcard und eines Smartcard-Lesegeräts oder eines Lesegeräts für handschriftliche Unterschriften (Signaturpad). Solche Techniken weisen den Nachteil auf, dass der Unterschreibende im Besitz dieser Geräte sein muss, um eine digitale Signatur eines Dokuments vorzunehmen.

Zum Beispiel sind aus US 20090077386 Techniken bekannt, um die Identität des unterschreibenden zuverlässig festzustellen (Identifizierung). Dort werden Techniken beschrieben, die auf der Verwendung eines biometrischen Scanners beruhen, bzw. eines Signaturpads. Solche Techniken weisen den Nachteil auf, dass der Benutzer zusätzliche Hardware benötigt, um eine digitale Signatur auszulösen.

### ZUSAMMENFASSUNG

Deshalb besteht ein Bedarf für verbesserte Techniken zur digitalen Signatur eines Dokuments. Insbesondere besteht ein Bedarf für Techniken, die eine digitale Signatur ermöglichen, ohne dass zusätzliche elektronische Geräte zur Identifizierung des Unterschreibenden erforderlich wären. Ferner besteht ein Bedarf für Techniken, die eine hohe Sicherheit bei der Identifizierung des Unterschreibenden gar nicht ermöglichen.

Diese Aufgabe wird von den Merkmalen der unabhängigen Ansprüche gelöst. Die abhängigen Ansprüche definieren Ausführungsformen.

Gemäß einem ersten Aspekt betrifft die vorliegende Erfindung ein Verfahren zum digitalen Signieren eines Dokuments. Das Verfahren umfasst das Empfangen von Bilddaten von mindestens einem Endgerät eines Benutzers. Die Bilddaten bilden ein Identifizierungs-Dokument mit einem Lichtbild des Benutzers ab. Das Verfahren umfasst ferner das Validieren von Identifizierungsinformation des Benutzers basierend auf den Bilddaten. Das Verfahren umfasst ferner das Bereitstellen von mindestens einem zu signierenden Dokument. Das Verfahren umfasst ferner das Auslösen einer Benutzer-spezifischen Signaturerstellung einer digitalen Signatur des mindestens einen zu signierender Dokuments basierend auf der validierten Identifizierungsinformation.

Zum Beispiel kann das Verfahren gemäß dem ersten Aspekt das Signieren des zu signierenden Dokuments auf einem Server umfassen.

Zum Beispiel kann die digitale Signatur eine elektronische Signatur im Sinne des Signaturgesetzes sein. Die beschriebenen Techniken können sowohl für eine so genannte fortgeschrittene Signatur, als auch für eine sogenannte qualifizierte Signatur eingesetzt werden. Zum Beispiel kann die Identifizierungsinformation ein oder mehrere Elemente der folgenden Gruppe umfassen: einen Vornamen des Benutzers; einen Nachnamen des Benutzers; eine Anschrift des Benutzers; ein Geburtsdatum des Benutzers; eine Telefonnummer des Benutzers. In anderen Worten kann die Identifizierungsinformation geeignet sein, um den Benutzer eindeutig zu identifizieren. Es kann zum Beispiel möglich sein, die Identifizierungsinformation basierend auf den empfangenen Bilddaten zu bestimmen. Zum Beispiel kann es möglich sein, die Identifizierungsinformation aus dem Identifizierungs-Dokument, wie es in den Bilddaten abgebildet ist, auszulesen. Es wäre aber auch möglich, dass die Identifizierungsinformation anderweitig bestimmt wird. Zum Beispiel könnte die Identifizierungsinformation in digitaler Form als dedizierte Steuernachricht von dem mindestens einen Endgerät des Benutzers empfangen werden. Dazu könnte zum Beispiel eine Formular-basierte Erfassung der Identifizierungsinformation erfolgen. Es wäre auch möglich, dass die Identifizierungsinformation in digitaler Form als Steuernachricht von einem weiteren Server empfangen wird.

Mittels der voranstehend beschriebenen Techniken kann es also möglich sein, besonders zuverlässig zu validieren, ob die Identifizierungsinformation des Benutzers zur Identität des Benutzers passt. Derart kann unterbunden werden, dass ein nicht autorisierter Benutzer die Benutzer-spezifische Signaturerstellung auslöst. Der Benutzer kann also identifiziert werden.

Das Verfahren gemäß dem ersten Aspekt kann zum Beispiel weiterhin das Empfangen mindestens eines Befehls zum Signieren von dem mindestens einen Endgerät des Benutzers umfassen. Zum Beispiel kann das Auslösen der Signaturerstellung in Reaktion auf das Empfangen des mindestens einen Befehls zum Signieren geschehen.

Indem das Signieren in Abhängigkeit von dem Befehl zum Signieren ausgeführt wird, kann sichergestellt werden, dass der Benutzer denjenigen Inhalt des Dokuments, auf den sich die Signatur bezieht, genehmigt. Derart kann einer Genehmigungsfunktion der herkömmlichen Signatur entsprochen werden.

Im Allgemeinen kann der mindestens eine Befehl ein expliziter Befehl oder ein impliziter Befehl sein. Zum Beispiel könnte der mindestens eine Befehl zum Signieren implizit in dem Bereitstellen des Identifizierungs-Dokuments durch den Benutzer beinhaltet sein. Es wäre zum Beispiel möglich, dass der Befehl zum Signieren einen gesprochenen Befehl des Benutzers umfasst, der als Tondatei empfangen wird. Zum Beispiel könnte die Tondatei im Rahmen eines Videochats empfangen werden. Derart kann mit besonders hoher Sicherheit festgestellt werden, dass nur der autorisierte Benutzer den Befehl zum Signieren des zu signierenden Dokuments geben kann. Ferner kann es möglich sein, dass Missverständnisse verhindert werden können, d.h. dass zum Beispiel das ungewollte Auslösen einer Signaturerstellung ohne tatsächlich vorliegende Genehmigung durch den Benutzer vermieden werden kann. Z.B. könnte der Befehl auch in einer Steuernachricht enthalten sein, die indiziert, dass ein bestimmter Knopf einer graphischen Benutzerschnittstelle (GUI) betätigt wurde oder dass ein bestimmter Code eingegeben wurde, der z.B. zuvor an des mindestens eine Endgerät übertragen wurde.

Gemäß einem zweiten Aspekt betrifft die vorliegende Erfindung einen Server. Der Server umfasst einen Prozessor. Der Prozessor ist eingerichtet, um Bilddaten von mindestens einem Endgerät eines Benutzers über eine Schnittstelle zu empfangen. Die Bilddaten bilden ein Identifizierungs-Dokument mit einem Lichtbild des Benutzers ab. Der Prozessor ist weiterhin eingerichtet, um Identifizierungsinformation des Benutzers basierend auf den Bilddaten zu validieren. Der Prozessor ist weiterhin eingerichtet, um eine Benutzer-spezifische Signaturerstellung einer digitalen Signatur mindestens eines zu signierenden Dokuments basierend auf der validierten Identifizierungsinformation auszulösen.

Gemäß einem dritten Aspekt betrifft die vorliegende Erfindung ein Verfahren zum digitalen Signieren eines Dokuments. Das Verfahren umfasst das Erfassen von Bilddaten mit mindestens einem Endgerät eines Benutzers. Das Verfahren umfasst weiterhin das Senden der Bilddaten an einen Server. Zum Beispiel können die Bilddaten ein Identifizierungs-Dokument mit einem Lichtbild des Benutzers abbilden. Das Verfahren umfasst weiterhin das Senden mindestens eines Befehls zum Signieren eines zu signierenden Dokuments an den Server.

Zum Beispiel können die Bilddaten mit einer Kamera des mindestens einen Endgeräts des Benutzers erfasst werden. Die Kamera kann eine Frontkamera oder eine Rückkamera eines Smartphones sein. Die Bilddaten können z.B. mehrere Einzelbilder umfassen oder als Film implementiert sein. Z.B. könnten die Bilddaten im Rahmen eines Videochats gesendet werden.

Beispielsweise könnte das Verfahren gemäß dem dritten Aspekt weiterhin umfassen: Empfangen von Information, die indikativ für das zu signierende Dokument ist, von dem Server.

Beispielsweise könnte das Verfahren gemäß dem dritten Aspekt weiterhin umfassen: Erfassen von weiteren Bilddaten, wobei die weiteren Bilddaten eine Gesichtspartie des Benutzers abbilden; und Senden der weiteren Bilddaten an den Server.

Es wäre z.B. möglich, dass der Befehl zu Signieren einen gesprochenen Befehl des Benutzers umfasst, der als Tonspur gesendet wird.

Gemäß einem vierten Aspekt betrifft die vorliegende Erfindung ein Endgerät. Das Endgerät umfasst eine Kamera, die eingerichtet ist, um Bilddaten zu erfassen. Die Bilddaten bilden ein Identifizierungs-Dokument mit einem Lichtbild des Benutzers ab. Das Endgerät umfasst weiterhin einen Prozessor, der eingerichtet ist, um die Bilddaten über eine Schnittstelle an einen Server zu senden. Der Prozessor ist weiterhin eingerichtet, um mindestens einen Befehl zum Signieren eines zu signierenden Dokuments an den Server zu senden.

Zum Beispiel kann das mindestens eine Endgerät des Benutzers eines oder mehrere der folgenden Elemente umfassen: ein Handy; ein Smartphone; einen Laptop; einen Fernseher; einen Tablet-PC.

Das Endgerät gemäß dem vierten Aspekt kann eingerichtet sein, um ein Verfahren zum digitalen Signieren eines Dokuments gemäß dem obenstehend beschriebenen dritten Aspekt durchzuführen.

Mittels der voranstehend beschriebenen Techniken kann es also möglich sein, eine digitale Signatur des zu signierenden Dokuments vorzunehmen, ohne dass der Benutzer besondere Hardware wie zum Beispiel ein Smartcard-Lesegerät oder ein Signaturpad einsetzen müsste. Es kann zum Beispiel ausreichen, dass das mindestens eine Endgerät des Benutzers die Bilddaten erzeugen, also über eine Kamera verfügt, und versenden kann, also eine Kommunikations-Schnittstelle aufweist.

Die oben dargelegten Merkmale und Merkmale, die nachfolgend beschrieben werden, können nicht nur in den entsprechenden explizit dargelegten Kombination verwendet werden, sondern auch in weiteren Kombination oder isoliert ohne den Schutzumfang der vorliegenden Erfindung zu verlassen.

### KURZBESCHREIBUNG DER FIGUREN

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.
Fig. 1 ist eine schematische Ansicht eines Systems, das einen Server, auf dem ein zu signierendes Dokument signiert werden kann, und ein Endgerät eines Benutzers umfasst.
Fig. 2 illustriert das Endgerät und den Server in größerem Detail.
Fig. 3 ist ein Signalfluss-Diagramm gemäß verschiedener Ausführungsformen der vorliegenden Erfindung, wobei ein Benutzer-spezifisches Zertifikat auf dem Server erstellt wird.
Fig. 4 ist ein Signalfluss-Diagramm gemäß verschiedener Ausführungsformen der vorliegenden Erfindung, wobei ein Benutzer-spezifisches und Dokument-spezifisches Zertifikat auf dem Server erstellt wird.
Fig. 5 ist ein Signalfluss-Diagramm gemäß verschiedener Ausführungsformen der vorliegenden Erfindung, wobei das zu signierenden Dokument von einem weiteren Server empfangen wird und wobei Information, die indikativ für das zu signierende Dokument ist, an das Endgerät des Benutzers gesendet wird.
Fig. 6 illustriert schematisch das Empfangen mehrerer Befehle zum Signieren verschiedener Teile eines zu signierenden Dokuments.
Fig. 7 ist ein Signalfluss-Diagramm gemäß verschiedener Ausführungsformen der vorliegenden Erfindung, wobei mehrere Dokumente im Rahmen einer einzelnen Identifizierung des Benutzers digital signiert werden.
Fig. 8 ist ein Signalfluss-Diagramm gemäß verschiedener Ausführungsformen der vorliegenden Erfindung, wobei ein Dokument basierend auf einem vorbestimmten Zertifikat im Rahmen einer Authentifizierung des zuvor identifizierten Benutzers digital signiert wird.
Fig. 9 ist ein Signalfluss-Diagramm gemäß verschiedener Ausführungsformen der vorliegenden Erfindung, welches Aspekte der Identifizierung des Benutzers in größerem Detail darstellt.
Fig. 10 illustriert ein Identifizierungs-Dokument mit einem Lichtbild des Benutzers.
Fig. 11 illustriert Bilddaten, die das Identifizierungs-Dokument mit dem Lichtbild des Benutzers abbilden und basierend auf denen eine Validierung von Identifizierungsinformation des Benutzers erfolgen kann.
Fig. 12 ist ein Flussdiagramm gemäß verschiedener Ausführungsformen der vorliegenden Erfindung.

### DETAILLIERTE BESCHREIBUNG VON AUSFÜHRUNGSFORMEN DER ERFINDUNG

Nachfolgend wird die vorliegende Erfindung anhand bevorzugter Ausführungsformen unter Bezugnahme auf die Zeichnungen näher erläutert. In den Figuren bezeichnen gleiche Bezugszeichen gleiche oder ähnliche Elemente. Die Figuren sind schematische Repräsentationen verschiedener Ausführungsformen der Erfindung. In den Figuren dargestellte Elemente sind nicht notwendigerweise maßstabsgetreu dargestellt. Vielmehr sind die verschiedenen in den Figuren dargestellten Elemente derart wiedergegeben, dass ihre Funktion und genereller Zweck dem Fachmann verständlich wird. In den Figuren dargestellte Verbindungen und Kopplungen zwischen funktionellen Einheiten und Elementen können auch als indirekte Verbindung oder Kopplung implementiert werden. Eine Verbindung oder Kopplung kann drahtgebunden oder drahtlos implementiert sein. Funktionale Einheiten können als Hardware, Software oder eine Kombination aus Hardware und Software implementiert werden.

Nachfolgend werden Techniken beschrieben, die es ermöglichen, ein Dokument digital zu signieren. Insbesondere ist es mittels der nachfolgend beschriebenen Techniken möglich, dass das Dokument digital auf einem Server signiert wird, wobei die Signaturerstellung gezielt durch einen Benutzer ausgelöst werden kann, der zuvor sicher und zuverlässig identifiziert wurde. Dazu kann Identifizierungsinformation, die spezifisch für den Benutzer ist, validiert werden. Dadurch kann einerseits eine Fälschung der Signatur vermieden werden und andererseits sichergestellt werden, dass der Benutzer die Signaturerstellung unter Kenntnis des zugehörigen Inhalts des zu signierenden Dokuments genehmigt hat. Zur Identifizierung können z.B. Techniken Anwendung finden, wie sie in DE 10 2013 100 635 A1 beschrieben sind.

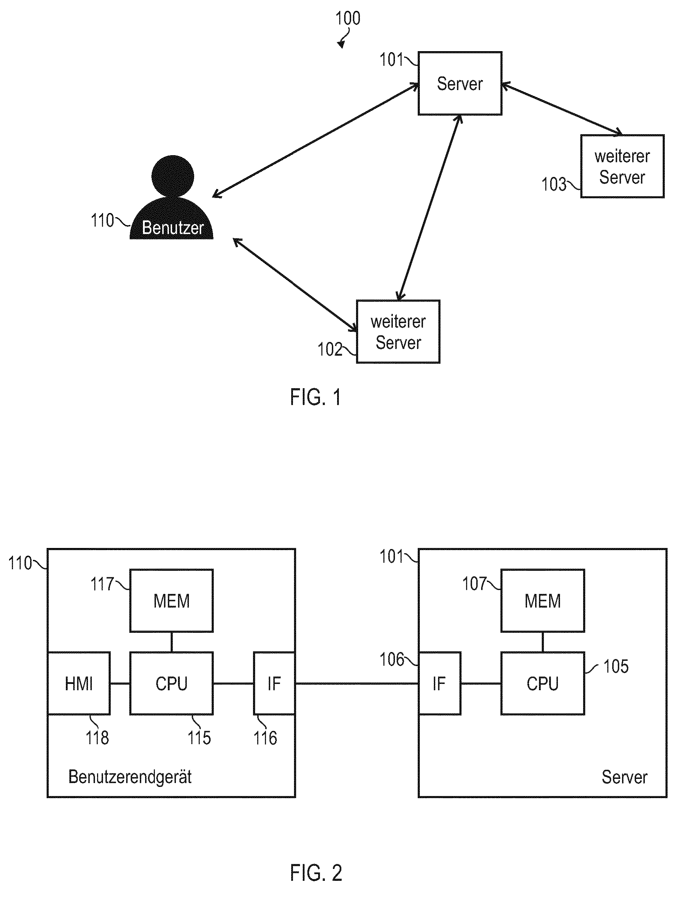

In Fig. 1 ist ein System 100 dargestellt, das ein Endgerät 110 des Benutzers und den Server 101 umfasst. Nachfolgend wird beispielhaft angenommen, dass es sich bei dem Endgerät 110 um ein Smartphone des Benutzers handelt; im Allgemeinen ist es aber möglich, dass das Endgerät 110 zum Beispiel ein Laptop, ein Fernseher, etc. ist. Insbesondere kann es möglich sein, dass verschiedene Kommunikation zwischen dem Benutzer und dem Server 101 und/oder einem weiteren Server 102 des Systems 100 durch unterschiedliche Endgeräte 110 des Benutzers abgewickelt wird. Zum Beispiel könnte eine Sprachverbindung zwischen dem Benutzer und dem Server 101 unter Verwendung eines Telefons des Benutzers hergestellt werden; während eine Datenverbindung zwischen dem Benutzer und dem Server 101 unter Verwendung eines Laptops des Benutzers hergestellt wird.

Der weitere Server 102 kann zum Beispiel das zu signierender Dokument 150 bereitstellen. Zum Beispiel könnte das zu signierenden Dokument 150 Vertragsunterlagen zwischen einem Betreiber des weiteren Servers 102 und dem Benutzer betreffen. Z.B. könnte der Benutzer eine Kontoeröffnung eines Bankkontos bei einer Bank anstreben, die den weiteren Server 102 betreibt.

Das System 100 umfasst weiterhin einen weiteren Server 103. Der weitere Server 103 kann zum Beispiel Kontrolldaten an den Server 101 senden, die beim Validieren der Identifizierungsinformation des Benutzers verwendet werden können. Diese können z.B. Information zu dem Benutzer betreffen, etwa Referenz-Adressdaten, eine Kreditwürdigkeit des Benutzers, usf.

In Fig. 2 sind das Smartphone 110 des Benutzers und der Server 101 in größerem Detail dargestellt. Das Smartphone 110 umfasst einen Prozessor 115, der mit einem Speicher 117 gekoppelt ist. Zum Beispiel kann es sich um einen nicht-flüchtigen Speicher 117 handeln. Außerdem umfasst das Smartphone 110 eine Benutzerschnittstelle 118. Die Benutzerschnittstelle 118 kann zum Beispiel eine Kamera umfassen, mit der Bilddaten erfasst werden können. Zusätzlich könnte die Benutzerschnittstelle 118 zum Beispiel eine Tastatur, Spracheingabe-Funktionalität, Sprachausgabe-Funktionalität, einen berührungsempfindlichen Bildschirm, Tasten oder Knöpfe etc. umfassen. Das Smartphone 110 umfasst weiterhin eine Schnittstelle 116. Die Schnittstelle 116 kann Kommunikation mittels verschiedener Kommunikationsstandards ermöglichen, so wie zum Beispiel WLAN, LAN, Bluetooth, NFC, USB, 3GPP 2G, 3GPP 3G, 3GPP 4G, 3GPP 5G, etc. Insbesondere kann der Prozessor 115 über die Schnittstelle 116 eine Datenverbindung mit dem Server 101 aufbauen, zum Beispiel über das Internet.

Dazu weist der Server 101 eine entsprechende Schnittstelle 106 auf. Der Server 101 umfasst auch einen Prozessor 105 und einen Speicher 107, zum Beispiel einen nicht-flüchtigen Speicher 107.

Der Speicher 117 des Smartphones 110 kann zum Beispiel Steuerdaten umfassen, die, wenn sie von dem Prozessor 115 ausgeführt werden, bewirken, dass nachfolgend beschriebene Techniken zum digitalen Signieren eines Dokuments durchgeführt werden. Entsprechend kann der Speicher 107 des Servers 101 Steuerdaten umfassen, die, wenn sie von dem Prozessor 105 ausgeführt werden, bewirken, dass nachfolgend beschriebene Techniken zum digitalen Signieren des Dokuments durchgeführt werden. Solche Techniken zum digitalen Signieren werden in Bezug auf die nachfolgenden Figuren näher beschrieben.

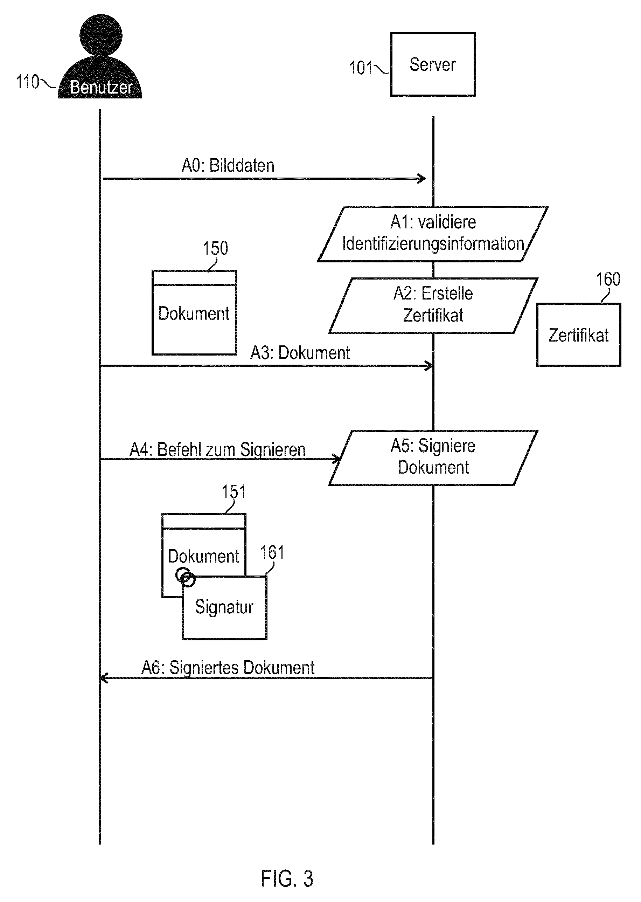

In Fig. 3 ist ein Signalfluss-Diagramm gemäß verschiedener Ausführungsformen dargestellt. Zunächst erfolgt das Identifizieren des Benutzers. Dazu sendet das Smartphone 110 Bilddaten an den Server 101 (A0). Die Bilddaten bilden ein Identifizierungs-Dokument mit einem Lichtbild des Benutzers ab. Insbesondere bilden die Bilddaten auch Identifizierungsinformation des Benutzers ab; zum Beispiel könnte das Identifizierungs-Dokument den Namen und die Anschrift des Benutzers enthalten. Dann kann der Server 101 zum Beispiel mittels Techniken der Bildverarbeitung die Identifizierungsinformation aus den Bilddaten bestimmen. Optional wäre es auch möglich, dass die Identifizierungsinformation des Benutzers in digitaler Form etwa als dedizierte Steuernachricht an den Server 101 gesendet wird (in FIG. 3 nicht gezeigt).

Anschließend validiert der Server 101 die Identifizierungsinformation (A1). Das Validieren der Identifizierungsinformation kann verschiedenste Techniken umfassen. Zum Beispiel könnte der Server 101 anderweitig erhaltene Identifizierungsinformation mit derjenigen Identifizierungsinformation, die in den Bilddaten beinhaltet ist, vergleichen. Alternativ oder zusätzlich wäre es zum Beispiel auch möglich, dass weitere Bilddaten von dem Smartphone 110 an den Server 101 übertragen werden. Zum Beispiel können die weiteren Bilddaten eine Gesichtspartie des Benutzers abbilden. Es wäre dann möglich, dass das Validieren der Identifizierungsinformation weiterhin auf den weiteren Bilddaten basiert. Zum Beispiel wäre es möglich, dass das Validieren der Identifizierungsinformation ein Vergleichen der in den weiteren Bilddaten abgebildeten Gesichtspartie des Benutzers mit dem Lichtbild des Benutzers aus den Bilddaten umfasst.

Im Allgemeinen kann also das Validieren der Identifizierungsinformation ein Überprüfen der Identifizierungsinformation auf Echtheit umfassen; insbesondere kann überprüft werden, ob eine von der Identifizierungsinformation indizierte Identität übereinstimmt mit der Identität des Benutzers. So kann überprüft werden, ob ein nicht autorisierter Benutzer digitale Signatur mit einer fremden Identität begehrt.

Im Szenario der FIG. 3 ist das Validieren der Identifizierungsinformation erfolgreich (A1); die Identität des Benutzers konnte zuverlässig ermittelt werden. Deshalb erstellt der Server 101 anschließend ein Zertifikat 160 (A2). Das Zertifikat 160 ist Benutzer-spezifisch für den Benutzer. Zum Beispiel könnte das Zertifikat 160 ein Attribut beinhalten, welches die Identität des Benutzers indiziert. Zum Beispiel könnte das Zertifikat 160 basierend auf der validierten Identifizierungsinformation bestimmt werden. Das Zertifikat 160 kann es ermöglichen, ein Dokument 150, welches von dem Smartphone 110 an den Server 101 übertragen wird (A3), zu signieren.

Da der Benutzer das Signieren des Dokuments 150 genehmigt, wird ein Befehl zum Signieren von dem Smartphone 110 an den Server 101 übertragen (A4). Dies löst das Versehen des Dokuments 150 mit der digitalen Signatur aus (A5).

In der Variante der Fig. 3 findet das Signieren des Dokuments 150 auf dem Server 101 statt. Im Allgemeinen ist es möglich, dass der Server 101 in Reaktion auf das Empfangen des Befehls zum Signieren lediglich die Benutzer-spezifische Signaturerstellung der digitalen Signatur 161 des zu signierenden Dokuments 150 auslöst; es wäre zum Beispiel möglich, dass das Signieren auf einem weiteren Server (in Fig. 3 nicht gezeigt) geschieht.

Anschließend wird das signierte Dokument 151 - d.h. das Dokument 150 welches nunmehr mit der digitalen Signatur 161 versehen ist - von dem Server 101 an das Smartphone 110 übertragen. Der Benutzer ist dann im Besitz des signierten Dokuments.

Aus Fig. 3 ist ersichtlich, dass der Benutzer weder im Besitz des Zertifikats 160 sein muss, noch entsprechende Hardware besitzen muss, welche die zuverlässige Validierung der Identifizierungsinformation ermöglicht. Das Smartphone 110 muss lediglich über eine Kamera verfügen, so dass die Bilddaten des Identifizierungs-Dokuments mit dem Lichtbild des Benutzers an den Server 101 gesendet werden können. Dies vereinfacht den Signaturprozess. Die Signaturerstellung kann besonders bequem und einfach, aber dennoch sicher durchgeführt werden.

In dem Szenario der Fig. 3 ist das Zertifikat 160 nicht Dokument-spezifisch für das Dokument 150. Dies bedeutet, dass es möglich wäre, ein weiteres Dokument unter Verwendung desselben Zertifikats 160 zu signieren (in Fig. 3 nicht gezeigt). Optional kann das Zertifikat 160 an das Smartphone 110 gesendet werden.

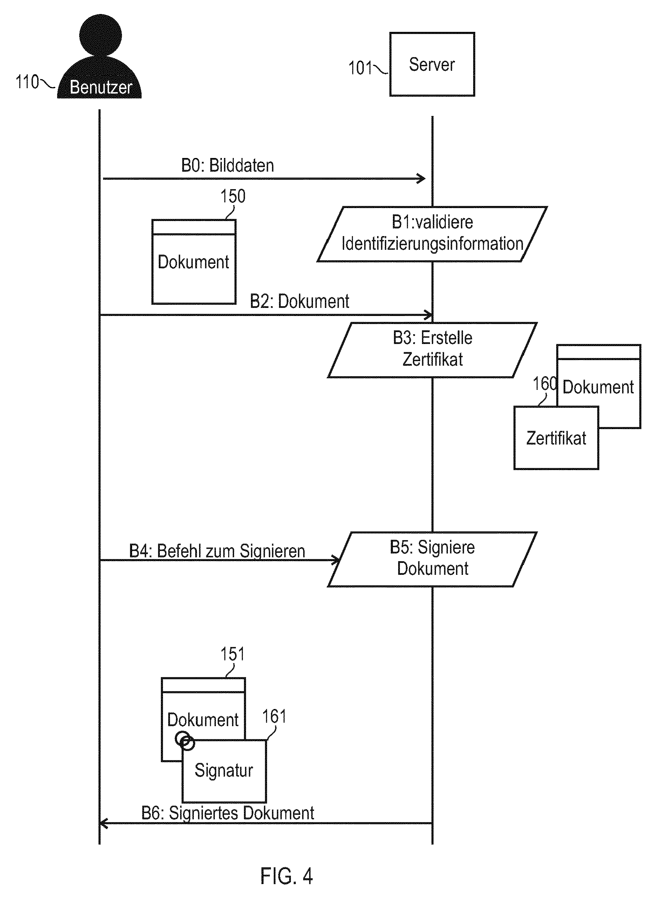

Um einen unautorisierten Missbrauch des Zertifikats 160 zu verhindern, kann es möglich sein, dass das Zertifikat 160 Dokument-spezifisch für das zu signierenden Dokument 150 erstellt wird. Ein solches Szenario ist in dem Signalfluss-Diagramm der Fig. 4 dargestellt. Dabei entsprechen B0 und B1 jeweils A0 und A1 aus Fig. 3.

Anschließend wird das zu signierenden Dokument 150 von dem Smartphone 110 an den Server 101 übertragen (B2). Dann wird auf dem Server 101 das Zertifikat 160 erstellt, welches nunmehr Dokument-spezifisch für das zu signierenden Dokument 150 ist; es wäre im Allgemeinen auch möglich, dass das Zertifikat 160 für eine bestimmte Anzahl von Dokumenten 150 spezifisch ist, z.B. für eine wohldefinierte Anzahl. Zum Beispiel könnte das Zertifikat 160 ein Attribut beinhalten, welches für das zu signierende Dokument 150 - oder für mehrere zu signierende Dokumente 150 - spezifische Information umfasst. Zum Beispiel könnte das Attribut einen Titel des zu signierenden Dokuments 150, eine Anzahl von Wörtern, ein Erstelldatum, einen Namen des Autors, oder eine Prüfsumme (engl. Hash) des zu signierenden Dokuments 150 indizieren. Im Allgemeinen könnte das Attribut auch Eigenschaften des zu signierenden Dokuments 150 parametrisiert spezifizieren. Derart kann das Zertifikat 160 für eine Klasse von Dokumenten 150, die Eigenschaften im erlaubten Bereich der Parameter aufweisen, spezifisch sein. Mittels solcher Techniken kann erreicht werden, dass das Zertifikat 160 nicht zum Signieren von weiteren Dokumenten verwendet werden kann; derart kann unautorisierte weitere Verwendung des Zertifikats verhindert werden.

### B4-B6 entsprechen A4-A6.

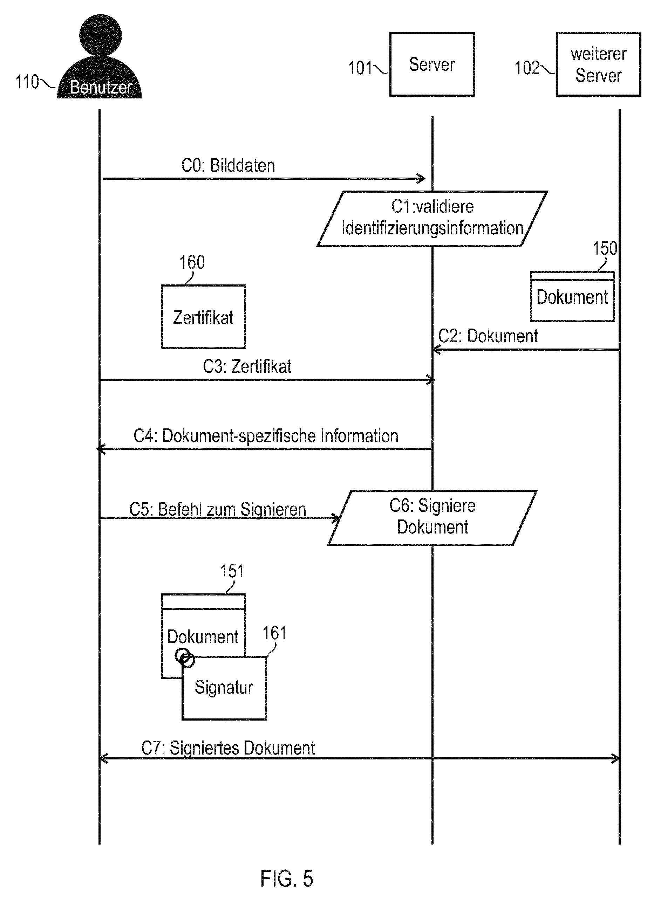

In Bezug auf die Figs. 3 und 4 wurde voranstehend Szenarien erläutert, bei denen das zu signierenden Dokument 150 von dem Smartphone 110 an den Server 101 übertragen wird. Im Allgemeinen wäre es auch möglich, dass das zu signierenden Dokument 150 von dem weiteren Server 102 an den Server 101 übertragen wird. Ein solches Szenario ist in Fig. 5 dargestellt.

Dabei entsprechen C0 und C1 jeweils A0 und A1. Anschließend wird das zu signierenden Dokument 150 von dem weiteren Server 102 an den Server 101 übertragen (C2), z.B. über das Internet. Es wäre zum Beispiel möglich, dass das zu signierenden Dokument 150 weiterhin von dem weiteren Server 102 an das Smartphone 110 übertragen wird (in Fig. 5 nicht gezeigt).

In dem Szenario der Fig. 5 wird weiterhin das Zertifikat 160 von dem Smartphone 110 an den Server 101 übertragen. Hierbei ist das Zertifikat 160 Benutzer-spezifisch für den Benutzer, jedoch nicht Dokument-spezifisch z.B. für das Dokument 150. Es wäre aber auch möglich, dass das Zertifikat 160 - zum Beispiel wie in Bezug auf die Figs. 3 und 4 voranstehend beschrieben - auf dem Server 101 erstellt wird.

Anschließend wird Information, die indikativ für das zu signierenden Dokument 150 sind, an das Smartphone 110 übertragen (C4). Mittels solcher Information kann der Benutzer in die Lage versetzt werden, zu überprüfen, dass er anschließend den Befehl zum Signieren (C5) des in Bezug auf das richtige Dokuments 150 gibt; also nicht etwa versehentlich oder ungewollt die Signaturerstellung eines anderen Dokuments auslöst. Zum Beispiel kann solche Information die Prüfsumme des zu signierenden Dokuments 150 umfassen. Es wäre auch möglich, dass diese Information das Dokument 150 selbst umfasst; zum Beispiel könnte das zu signierenden Dokument 150 in eine Webseite eingebettet an das Smartphone 110 gesendet werden. Solche Information könnte zum Beispiel auch einen Titel, einen Autor, eine Anzahl von Wörtern, etc. des zu signierenden Dokuments 150 umfassen.

In Reaktion auf das Empfangen des Befehls zum Signieren C5, erfolgt das Signieren des Dokuments 150 auf dem Server 101 (C6). Anschließend wird das signierte Dokument 151 von dem Server 101 an das Smartphone 110, sowie von dem Server 101 an den weiteren Server 102 gesendet (C7).

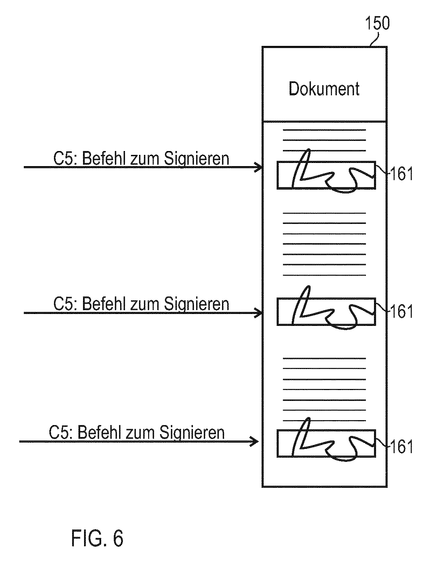

In verschiedenen Szenarien kann es möglich sein, dass das zu signierende Dokument 150 an verschiedenen Positionen innerhalb des Dokuments 150 jeweils mit einer digitalen Signatur 161 versehen wird (Mehrfachsignatur), vgl. Fig. 6. In anderen Worten kann sich die entsprechende digitale Signatur 161 jeweils auf einen Teil oder Abschnitt des zu signierenden Dokuments 150 beziehen.

Alternativ oder zusätzlich wäre es auch möglich, dass die digitale Signatur 161 jeweils das gesamte Dokument 150 betrifft bzw. umfasst; das Einverständnis des Benutzers, wie es durch den Befehl zum Signieren C5 indiziert wird, kann jedoch jeweils für verschiedene Abschnitte des Dokuments 150 erteilt werden.

In einem solchen Fall kann es in einer einfachen Implementierung ausreichend sein, wenn der Benutzer einen einzelnen Befehl zum Signieren an den Server 101 sendet, woraufhin das zu signierenden Dokument 150 an verschiedenen Stellen mehrfach digital signiert wird. Es wäre aber auch möglich, dass der Benutzer pro digitaler Signatur 161 jeweils einen Befehl zum Signieren C5 sendet. Ein solches Szenario ist in Fig. 6 dargestellt. Zum Beispiel könnte in einem solchen Szenario die Information, die indikativ für das zu signierenden Dokument 150 ist, jeweils einen bestimmten Abschnitt des Dokuments 150 indizieren; derart kann sichergestellt werden, dass der Benutzer durch den zugehörigen Befehl zum Signieren jeweils seine Genehmigung in Bezug auf den richtigen Abschnitt des Dokuments 150 zum Ausdruck bringt.

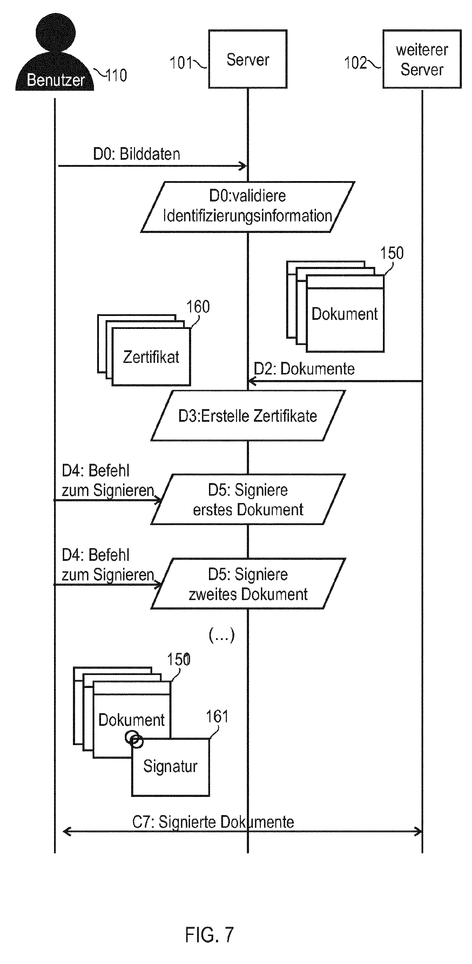

Voranstehend wurden Techniken beschrieben, bei denen durch das Validieren der Identifizierungsinformation basierend auf den Bilddaten erreicht werden kann, dass das zu signierende Dokument 150 auf den Befehl durch den identifizierten bzw. autorisierten Benutzer hin mit der digitalen Signatur 161 versehen wird. In Fig. 7 ist ein Szenario dargestellt, bei dem nach erfolgter Validierung der Identifizierungsinformation basierend auf den zuvor übertragenen Bilddaten (D0, D1) mehrere Dokumente 150 signiert werden. Dies kann zum Beispiel der Fall sein, wenn ein Benutzer einen Vertrag, Allgemeine Geschäftsbedingungen, sowie Datenschutzbestimmungen im Rahmen eines Vertragswerks unterschreiben möchte. Dabei werden die mehreren zu signierenden Dokumente 150 von dem weiteren Server 102 an den Server 101 übertragen (D2); alternativ oder zusätzlich könnten auch zumindest Teile der mehreren zu signierenden Dokumente 150 von dem Smartphone 110 and den Server 101 übertragen werden (in Fig. 7 nicht dargestellt). Anschließend werden auf dem Server 101 eine entsprechende Anzahl von Dokument-spezifischen und Benutzer-spezifischen Zertifikaten 160 erstellt (D3). Dies kann mittels entsprechender Techniken, wie sie voranstehend in Bezug auf B3 in Fig. 4 erläutert wurden, geschehen. Es wäre alternativ auch möglich, dass lediglich ein Zertifikat 160 verwendet wird, das nicht Dokument-spezifisch ist. Dieses Zertifikat 160 kann dann für alle Dokumente 150 verwendet werden, um eine entsprechende Signatur 160 zu erzeugen.

Im Allgemeinen ist es auch möglich, dass ein Dokument-spezifisches Zertifikat 160 verwendet wird, welches spezifisch für mehrere Dokumente 150 ist, also z.B. für eine Gruppe oder Klasse von Dokumenten. Z.B. könnte das Dokument-spezifische Zertifikat 160 eine Anzahl von Attributen beinhalten, die der Anzahl von Dokumenten 150 entspricht, für die es spezifisch ist; z.B. könnte jedes Attribut ein spezifisches Dokument 150 eindeutig identifizieren, z.B. über eine Prüfsumme, einen Titel, einen Autor, und / oder eine Anzahl an Wörtern, etc. Es wäre im Allgemeinen auch möglich, dass ein Zertifikat, das Dokument-spezifisch für mehrere Dokumente ist, parametrisierte Informationen umfasst, die für eine Klasse von Dokumenten spezifisch ist. Z.B. könnte ein Zertifikat 160 für alle Dokumente 150 vom Typ "Mietvertrag" spezifisch sein. Z.B. könnte ein Zertifikat 160 für alle Dokumente 150 mit einer Anzahl von Wörtern kleiner als 100 spezifisch sein. Z.B. könnte ein Zertifikat 160 für alle Dokumente spezifisch sein, die in einem bestimmten Zeitraum erstellt werden. Bezug nehmend auf das Szenario der Fig. 7 bedeutet das: Z.B. könnte ein einzelnes Zertifikat 160 erstellt werden, das Dokument-spezifisch für alle in D2 empfangenen Dokumente 150 ist - und z.B. nur für diese Dokumente 150 Dokument-spezifisch ist, sodass weitere Dokumente (in Fig. 7 nicht gezeigt) nicht mehr signiert werden können.

Anschließend wird eine Reihe von Befehlen zum Signieren von dem Smartphone 110 an den Server 101 übertragen (D4) und das jeweils zugehörige zu signierende Dokument 150 signiert (D5). Jeder Befehl zum Signieren D4 ist dabei einem der zu signierenden Dokumente 150 zugeordnet. Optional könnte es möglich sein, jeweils Information, die indikativ für das jeweilige zu signierende Dokument 150 ist, von dem Server 101 an das Smartphone 110 des Benutzers zu übertragen (in Fig. 7 nicht dargestellt).

Anschließend werden die signierten Dokumente 151 von dem Server 101 an das Smartphone 110 und von dem Server 101 an den weiteren Server 102 übertragen (C7).

Grundsätzlich kann eine besonders hohe Sicherheit erzielt werden, wenn für jede Signaturerstellung der digitalen Signatur 161 eine Identifizierung des Benutzers durch Validierung der Identifizierungsinformation stattfindet. Voranstehend wurde bereits zum Beispiel in Bezug auf die Figs. 6 und 7 ein Szenario erläutert, bei dem es möglich ist, dass pro Identifizierungsvorgang mehrere Signaturerstellung ausgelöst werden. Dies kann insbesondere dann der Fall sein, wenn die mehreren Signaturerstellung in einem zeitlichen Kontext mit dem Identifizierungsvorgang stehen. Zum Beispiel wäre es möglich, dass sowohl das Übertragen der Bilddaten, als auch das Übertragen der Befehle zum Signieren in einem solchen Fall im Rahmen eines Videochats durchgeführt werden. Derart kann nämlich überprüft werden, dass eine einmal identifizierte Person die nachfolgende(n) Signaturerstellung(en) durch die zugehörigen Befehle zum Signieren auslöst - und nicht etwa ein Wechsel des Benutzers stattfindet.

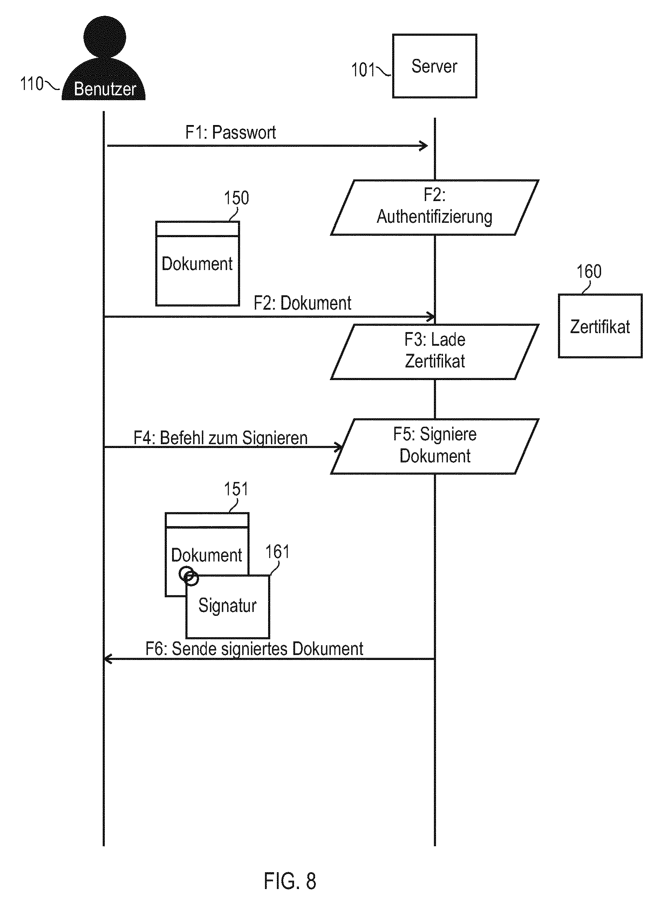

Sofern kein zeitlicher Kontext zwischen dem Identifizieren des Benutzers und der angestrebten Signaturerstellung vorliegt, kann es erforderlich sein, dass die Identifizierung des Benutzers erneut durchgeführt wird. In anderen Szenarien kann es jedoch möglich sein, dass auch in einem solchen Fall, bei dem kein zeitlicher Kontext vorliegt, die Signaturerstellung ohne erneute Identifizierung des Benutzers, d.h. ohne erneutes Validieren der Identifizierungsinformation, vorgenommen wird. Ein solches Szenario ist in Bezug auf die Fig. 8 erläutert.

In Fig. 8 sendet ein bereits zuvor identifizierter Benutzer (in Fig. 8 nicht gezeigt) ein Passwort an den Server 101 (F0). Es ist nicht erforderlich, erneut Bilddaten zu erfassen und zu übertragen. Dann erfolgt eine Authentifizierung des Benutzers (F1). Zum Beispiel kann im Rahmen der Authentifizierung das Passwort mit einem hinterlegten Passwort verglichen werden. Im Allgemeinen kann die Authentifizierung alternativ oder zusätzlich zu der voranstehend beschriebenen Passwort-basierten Authentifizierung weitere Techniken einsetzen. Zum Beispiel könnte das Authentifizieren des Benutzers weiterhin eine biometrische Authentifizierung und/oder eine Multi-Faktor Authentifizierung umfassen, die mehrere Kommunikationskanäle einsetzt, also z.B. email, SMS, usf.. Das Authentifizieren des Benutzers könnte zum Beispiel auch basierend auf einer Geo-Position des Benutzers stattfinden. Das Authentifizieren des Benutzers könnte zum Beispiel weitere Metadaten, wie etwa eine SIM-Nummer einer Handykarte des Benutzers, eine IP-Adresse des Benutzers, etc. umfassen. Zum Beispiel könnte die biometrische Authentifizierung einen Fingerabdruck, eine Augenfarbe, eine Gesichtspartie, etc. des Benutzers mit entsprechend hinterlegten Daten abgleichen. Die Multi-Faktor Authentifizierung kann zum Beispiel unterschiedlichste Kommunikationskanäle zwischen dem Benutzer und dem Server 101 verwenden. Zum Beispiel könnte es im Rahmen der Multi-Faktor Authentifizierung möglich sein, über SMS, E-Mail, VideoChat, etc. mit dem Benutzer zu kommunizieren. Dabei können mehrere Endgeräte 110 des Benutzers eingesetzt werden.

Im Falle der Fig. 8 ist die Authentifizierung des Benutzers erfolgreich. Dann wird ein weiteres zu signierendes Dokument 150 - d.h. zusätzlich zu dem oder den zu signierenden Dokumenten 150, die früher im Rahmen der Identifizierung des Benutzers bereitgestellt wurden (in FIG. 8 nicht gezeigt) - z.B. von dem Smartphone 110 an den Server 101 übertragen oder von dem weiteren Server 102 an den Server 101 (in FIG. 8 nicht gezeigt). Anschließend wird ein bereits existierendes Benutzer-spezifisches Zertifikat 160 geladen; dieses Zertifikat 160 ist nicht Dokument-spezifisch. Alternativ wäre es auch möglich, dass ein neues Zertifikat 160 auf dem Server 101 erstellt wird.

### F4-F6 entsprechen A4-A6.

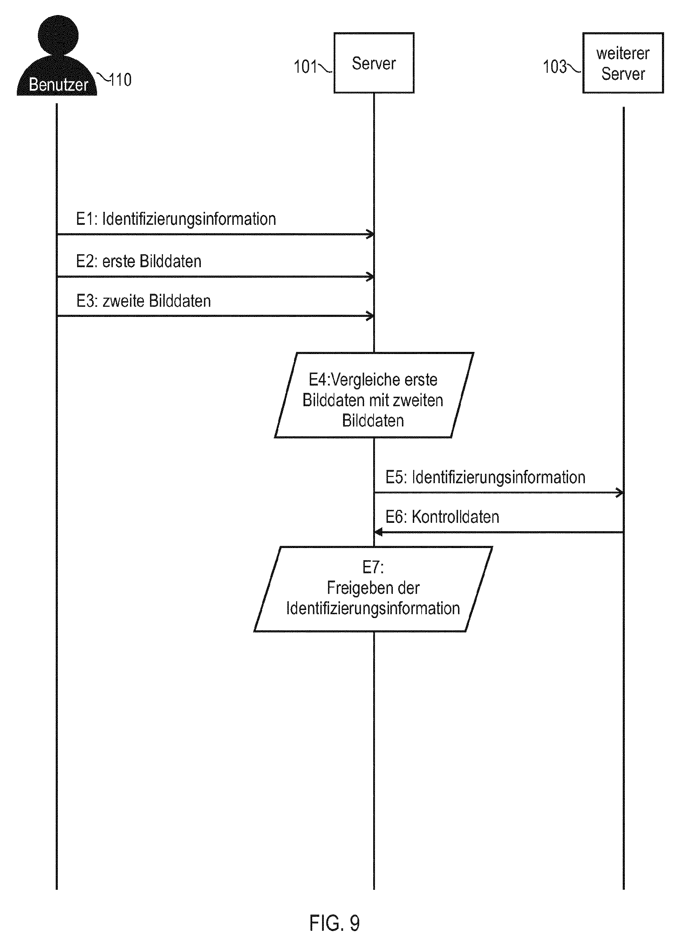

In Bezug auf die voranstehend erläuterten Szenarien wurde das Identifizieren des Benutzers erläutert. In Fig. 9 sind weitere Details zum Identifizieren des Benutzers dargestellt. Das Identifizieren des Benutzers in diesem Szenario beruht auf einem Vergleichen der Bilddaten, die das Identifizierungs-Dokument mit einem Lichtbild des Benutzers abbilden, mit weiteren Bilddaten, die die Gesichtspartie des Benutzers abbilden. Dies wird nachfolgend detaillierter erläutert.

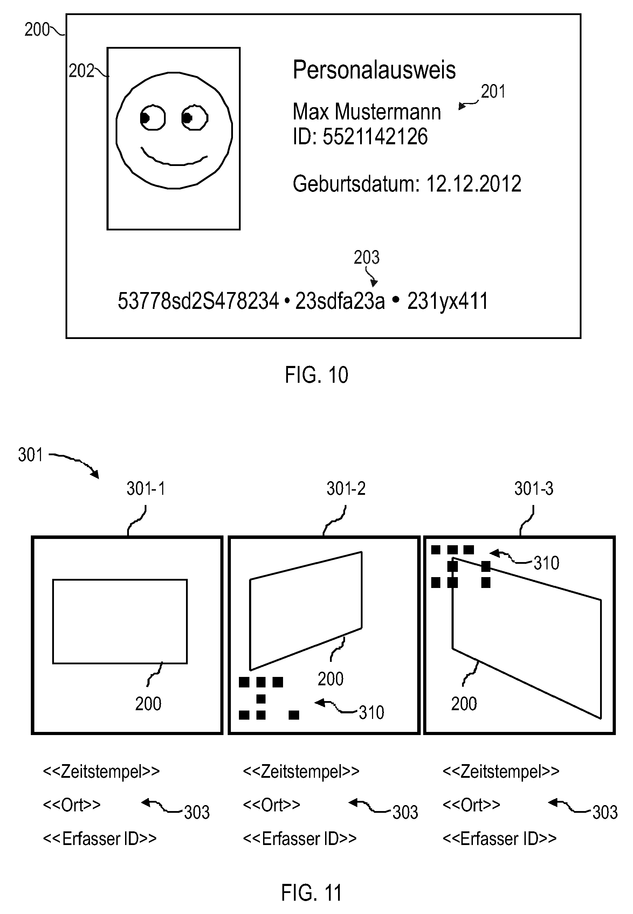

In dem Szenario der Fig. 9 wird zunächst Identifizierungsinformation von dem Smartphone 110 an den Server 101 in einer dedizierten Steuernachricht und in digitaler Form übertragen (E1); dies ist jedoch optional. Anschließend werden erste Bilddaten von dem Smartphone 110 an den Server 101 übertragen; die ersten Bilddaten 301 bilden das Identifizierungsdokument 200 mit einem Lichtbild 202 des Benutzers ab (vgl. Fig. 10). Das Identifizierungs-Dokument 200 kann zum Beispiel weiterhin die Identifizierungsinformation 201, zum Beispiel einen Namen und ein Geburtsdatum des Benutzers, umfassen.

Alternativ oder zusätzlich zum separaten Übertragen der Identifizierungsinformation in E1, Fig. 9, wäre es also auch möglich, die Identifizierungsinformation 201 aus den ersten Bilddaten zu ermitteln. Das Bestimmen der Identifizierungsinformation 201 des Benutzers aus den ersten Bilddaten anhand des Identifizierungs-Dokuments kann z.B. umfassen: Durchführen einer automatischen Texterkennung der ersten Bilddaten zum Bestimmen der Identifizierungsinformation in elektronisch lesbarer Form. Optional kann das Bestimmen der Identifizierungsinformation umfassen: Erkennen eines Typs des Identifizierungs-Dokuments 200 anhand der ersten Bilddaten. Wie obenstehend beschrieben, sind verschiedenen Typen von Identifizierungs-Dokumenten 200 bekannt, etwa Pässe, Personalausweise, Führerscheine, etc., jeweils in unterschiedlicher Form für verschiedene Staaten oder Hoheitsgebiete bzw. Jurisdiktionen. In der Regel weisen die verschiedenen Typen von Identifizierungs-Dokumenten 200 unterschiedliche Identifizierungsinformation 201 des Benutzers auf. Deshalb kann es erstrebenswert sein, zunächst den Typ des Identifizierungs-Dokuments 200 zu erkennen und anschließend die Identifizierungsinformation 201 zu bestimmen.

Z.B. können die Identifizierungsinformation 201 umfassen: Alter des Benutzers, Name des Benutzers, Adresse des Benutzers, Bankverbindung des Benutzers, und/oder Geburtsdatum des Benutzers, Kennnummer des Identifizierungs-Dokuments, Ausstellungsort des Identifizierungs-Dokuments 200, Ausstellungsdatum des Identifizierungs-Dokuments 200, Gültigkeit des Identifizierungs-Dokuments 200, usf.

Zum Beispiel wäre es auch möglich, sensible Daten in dem Identifizierungs-Dokument 200 zu maskieren, z.B. auf dem Smartphone 110 oder auf dem Server 101; entsprechende Techniken sind z.B. aus der Deutschen Patentanmeldung DE 10 2014 207 439.8 bekannt.

Das Identifizierungs-Dokument 200 weist weiterhin Integritätsmerkmale bzw. Sicherheitsmerkmale wie eine Prüfsumme 203 und ein Hologramm (in Fig. 10 nicht dargestellt) auf.

In FIG. 10 ist das Identifizierungs-Dokument 200 von dem Typus Personalausweis. Es sollte jedoch verstanden werden, dass im Allgemeinen jedes andere Identifizierungs-Dokument 200 mit Lichtbild 202 verwendet werden kann, z.B. insbesondere Pässe oder Führerscheine. Außerdem können verschiedene Identifizierungs-Dokumente 200 unterschiedliche Informationen aufweisen, insbesondere in Bezug auf die Identifizierungsinformation 201. Je nach Art und Umfang der vorhandenen Identifizierungsinformation 201 kann das Identifizieren basierend auf einer unterschiedlichen Informationsgrundlage geschehen. Jedoch bleiben die grundlegenden, hierin beschriebenen Techniken im Allgemeinen hiervon unberührt.

In verschiedenen Szenarien kann es z.B. möglich sein, dass die ersten Bilddaten und/oder die zweiten Bilddaten jeweils drei oder mehr Bilder des Identifizierungs-Dokuments 200 und/oder der Gesichtspartie des Benutzers, aus jeweils unterschiedlichen Perspektiven und sequentiell zu unterschiedlichen Zeitpunkten erfasst sind, beinhalten.

Zum Beispiel kann es derart möglich sein, Täuschungen zu vermeiden, die darauf beruhen, dass ein Abbild von vorgefertigten Photographien für die ersten Bilddaten und / oder die zweiten Bilddaten erfasst wird. Dies kann der Fall sein, da z.B. eine Abbildung der Gesichtspartie in den zweiten Bilddaten unterschiedlich ist für ein Szenario, in dem die zweiten Bilddaten anhand der tatsächlichen Gesichtspartie des Benutzers, z.B. mittels einer Kamera erfasst werden, und für ein Szenario, bei dem die zweiten Bilddaten durch Erfassen einer vorgefertigten, zweidimensionalen Photographie der Gesichtspartie des Benutzers erhalten werden.

Durch Verwenden von mindestens zwei Bildern, die mit jeweils unterschiedlichen Belichtungsparametern, etwa unterschiedlichen Belichtungszeiten, erfasst sind, kann es möglich sein, bestimmte Sicherheitsmerkmale des Identifizierungs-Dokuments 200 in den ersten Bilddaten gut sichtbar zu machen. Zum Beispiel können verschiedene Typen von Identifizierungs-Dokumenten 200 solche Sicherheitsmerkmale wie Wasserzeichen, Hologramme, Sicherheitsstrukturen etc. beinhalten. Typischerweise können solche Sicherheitsmerkmale insbesondere dann sichtbar werden, wenn unterschiedliche Belichtungsparameter und/oder Blitzfunktionen verwendet werden.

Auch in Bezug auf die zweiten Bilddaten kann die Gesichtspartie des Benutzers durch Verwenden von unterschiedlichen Belichtungsparametern und / oder Blitzfunktionen auf Echtheit überprüft werden. So kann es z.B. möglich sein, durch das Verwenden von Blitzfunktionen einen sogenannten "Rote-Augen-Effekt" in den zweiten Bilddaten für die Gesichtspartie des Benutzers gezielt zu stimulieren oder zu vermeiden. Werden z.B. zwei Bilder im Rahmen der zweiten Bilddaten empfangen, die einmal mit solchen Blitzparametern erfasst wurden, die den "Rote-Augen-Effekt" stimulieren, und einmal mit solchen Blitzparametern empfangen wurden, die den "Rote-Augen-Effekt" unterdrücken, so kann das Vorhandensein des "Rote-Augen-Effekts" in den zweiten Bilddaten ein Indiz für die Echtheit der empfangenen zweiten Bilddaten sein.

Das Verfahren kann umfassen: Durchführen eines Konsistenz-Checks des Identifizierungs-Dokuments 200 basierend auf den Integritätsmerkmalen 203. Z.B. kann mittels Prüfsummen überprüft werden, ob einzelne Ziffern oder Buchstaben der Identifizierungsinformation des Identifizierungs-Dokuments verändert wurden, etwa aus einer "1" eine "4" gemacht wurde usf. Fälschungen können vermieden werden.

Für die verschiedenen Typen von Identifizierungs-Dokumenten 200 sind verschiedene Arten von Integritätsmerkmalen bekannt. Zum Beispiel kann es mittels der Prüfsumme möglich sein, Fälschungen und/oder Fehlbestimmungen der Identifizierungsinformation des Benutzers zu erkennen. Das Vorhandensein von Integritätsmerkmalen wie Wasserzeichen und/oder Hologramm-Abbildungen kann es darüber hinaus ermöglichen, die Integrität des in den ersten Bilddaten abgebildeten Identifizierungs-Dokuments 300 zu verifizieren. Es ist auch möglich, dass aus den ersten Bilddaten biometrische Daten des Benutzers, etwa eine Augenfarbe etc., bestimmt werden können. Das Vergleichen der ersten Bilddaten mit den zweiten Bilddaten kann dann auch ein Vergleichen der biometrischen Daten mit den zweiten Bilddaten beinhalten. Zum Beispiel kann eine Augenfarbe des Benutzers, wie sie in den biometrischen Daten des Identifizierungs-Dokuments spezifiziert ist, mit der in den zweiten Bilddaten abgebildeten Augenfarbe der Gesichtspartie des Benutzers verglichen werden.

Wieder Bezug nehmend auf Fig. 9: anschließend werden die zweiten Bilddaten von dem Smartphone 110 an den Server 101 übertragen (E3). Die zweiten Bilddaten bilden die Gesichtspartie des Benutzers ab. Die ersten Bilddaten und/oder die zweiten Bilddaten können aus folgender Gruppe ausgewählt sein: ein Bild; ein Selfie; einen Film bzw. Video; ein Foto; ein Einzelbild; mindestens zwei Bilder oder zwei Filme, die sequentiell zu unterschiedlichen Zeitpunkten erfasst sind; mindestens zwei Bilder oder zwei Filme, die mit jeweils unterschiedlichen Belichtungsparametern erfasst sind, mindestens zwei Bilder oder Filme, die das Identifizierungs-Dokument oder die Gesichtspartie aus unterschiedlichen Perspektiven und/oder Abständen abbilden. Zum Beispiel wäre es möglich, dass die ersten Bilddaten und die zweiten Bilddaten im Rahmen eines Videochats zwischen einem Bedienpersonal und dem Benutzer von dem Smartphone 110 an den Server 101 übertragen werden.

Die ersten Bilddaten werden dann mit den zweiten Bilddaten verglichen (E4); insbesondere kann es möglich sein, dass die in den zweiten Bilddaten abgebildete Gesichtspartie des Benutzers mit dem Lichtbild 202 des Benutzers, das in den ersten Bilddaten abgebildet ist, verglichen wird. Derart kann sichergestellt werden, dass der Benutzer und der Inhaber des Identifizierungs-Dokuments 200 dieselbe Person sind. Das Vergleichen der ersten Bilddaten mit den zweiten Bilddaten kann automatisch, teil-automatisch oder manuell geschehen. Zum Beispiel kann bei automatischen und/oder teil-automatischen Techniken das Vergleichen der Bilddaten umfassen: Extrahieren einer Abbildung des Lichtbilds des Benutzers aus den ersten Bilddaten; und Durchführen einer Bildregistrierung zwischen der Abbildung des Lichtbilds und den zweiten Bilddaten, um ein Ähnlichkeitsmaß zwischen der Abbildung des Lichtbilds und den zweiten Bilddaten zu erhalten; und Durchführen eines Schwellenwertvergleichs zwischen dem Ähnlichkeitsmaß und einem vorgegebenen Referenz-Schwellenwert. Es ist auch möglich, dass der Referenz-Schwellenwert in Abhängigkeit einer Sicherheits-Stufe vorgegeben wird, wobei die Sicherheitsstufe indikativ für eine angestrebte Fälschungs- und Täuschungssicherheit sein kann. Daten, die indikativ für die Sicherheitsstufe sind, können an dem Identitäts-Server von einem weiteren Server empfangen werden.

Derart kann es möglich sein, automatisch oder teil-automatisch zu überprüfen, ob das Lichtbild 202 des Benutzers, wie es auf den ersten Bilddaten erhalten wird, eine große oder kleine Ähnlichkeit mit der Gesichtspartie des Benutzers, wie es aus den zweiten Bilddaten erhalten wird, aufweist. Bei einer genügend großen Ähnlichkeit, d. h. bei einem positiven Ergebnis des Schwellenwertvergleichs, kann angenommen werden, dass Identifizierungs-Dokument 200 und Benutzer zusammen gehören. Die Identifizierungsinformation 201 beschreiben dann mit großer Wahrscheinlichkeit die Identität des Benutzers und können für das Identifizieren verwendet werden. Ein positives Identifizierungs-Ergebnis kann erhalten werden.

Entsprechend wäre es auch möglich, dass das Vergleichen der ersten Bilddaten mit den zweiten Bilddaten manuell z.B. durch ein Bedienpersonal erfolgt. Das Bedienpersonal kann z.B. die ersten und zweiten Bilddaten von dem Server 101 erhalten und derart das Vergleichen der ersten und zweiten Bilddaten durch Augenschein durchführen. Z.B. kann das manuelle Vergleichen lediglich selektiv dann durchgeführt werden, wenn keine genügend große Ähnlichkeit des Lichtbilds des Benutzers mit der Gesichtspartie bei automatischen Techniken festgestellt wurde.

Bei einer großen (geringen) Ähnlichkeit des Lichtbilds des Benutzers mit der Gesichtspartie des Benutzers kann mit hoher (geringer) Wahrscheinlichkeit angenommen werden, dass der Benutzer die durch das Identifizierungs-Dokument 200 identifizierte Person ist. Ist z.B. diese Ähnlichkeit größer als ein vorbestimmter Schwellenwert, so kann die Identität oder bestimmte Identitäts-Kriterien wie etwa das Alter oder der Name des Benutzers aus den bestimmten Identifizierungsinformation 201 des Identifizierungs-Dokuments 200 bestimmt werden.

Ferner erfolgt in E4 das Abgleichen der aus den ersten Bilddaten ermittelten Identifizierungsinformation 201 mit der separat übertragenen Identifizierungsinformation aus E1. Sofern diese übereinstimmen, kann ein positives Identifizierungs-Ergebnis erhalten werden.

Durch die vorangehend beschriebenen Techniken kann es möglich sein, ein vergleichsweise schnelles Identifizieren des Benutzers durchzuführen. Zum Beispiel kann es möglich sein, dass der Benutzer mittels des Smartphones 110 die ersten und zweiten Bilddaten erfasst und über das Internet an den Server 101 sendet. Dazu muss sich der Benutzer nicht in einer besonderen örtlichen Beziehung in Bezug auf den Server 101 befinden, z.B. kann sich der Benutzer zuhause oder an seinem Arbeitsplatz befinden. Wenn die ersten und zweiten Bilddaten auf dem Server 101 empfangen sind, kann es ohne signifikante weitere Wartezeit möglich sein, das Identifizieren des Benutzers durch das Vergleichen der ersten und zweiten Bilddaten und das Bestimmen der Identifizierungsinformation anhand des Identifizierungs-Dokuments 200 durchzuführen.

In einem Fall, dass diese verschiedenen Größen jeweils miteinander übereinstimmen, wird anschließend die Identifizierungsinformation 201 zumindest teilweise von dem Server 101 an den weiteren Server 103 übertragen (E5). Zum Beispiel kann der weitere Server 103 eine Datenbank umfassen, die Referenz-Identifizierungsinformation umfasst. Derart kann zum Beispiel die Echtheit der Identifizierungsinformation 201 überprüft werden. Es wäre auch möglich, dass der weitere Server 103 eine schwarze Liste mit gesperrten Identitäten aufweist; der Art könnte vermieden werden, dass nicht zugelassene Personen eine digitale Signatur des zu signierenden Dokuments 150 anstreben. In jedem Fall kann der weitere Server 103 einen Abgleich der empfangenen Identifizierungsinformation 201 mit der Referenz-Identifizierungsinformation durchführen und gegebenenfalls weitere Parameter in Betracht ziehen. Ein Ergebnis wird im Rahmen von Kontrolldaten von dem weiteren Server 103 an den Server 101 übermittelt (E6). Sofern die Kontrolldaten ein positives Ergebnis indizieren, erfolgt anschließend das Freigeben der Identifizierungsinformation 201 im Rahmen der Validierung (E7).

Nachfolgend werden weitere Techniken beschrieben, die das Identifizieren des Benutzers optional noch sicherer bzw. zuverlässiger gestalten können.

Die Techniken könnten etwa weiterhin umfassen: Erzeugen von Steuerdaten auf dem Server 101 und Senden der Steuerdaten von dem Server 101 an das Smartphone 110. Die Steuerdaten können das Smartphone 110 instruieren, die ersten Bilddaten und/oder die zweiten Bilddaten mit bestimmten Bildparametern zu erfassen. Die Bildparameter können vorzugsweise aus folgender Gruppe ausgewählt sein: Anzahl von Bildern; Belichtungsparameter; Blitzfunktion; Bildauflösung. Die Belichtungsparameter können z.B. aus folgender Gruppe ausgewählt werden: Blendenzahl, Belichtungszeit, Lichtempfindlichkeit.

Umfassen die ersten Bilddaten und / oder die zweiten Bilddaten eine Abfolge von Bildern, z.B. im Rahmen eines Videochats, so können die Steuerdaten jeweils unterschiedlich für die verschiedenen Bilder der Abfolge von Bildern sein.

Zum Beispiel kann das Erzeugen der Steuerdaten in Abhängigkeit von einem Zufallswert erfolgen, in Abhängigkeit eines Zeitpunkts erfolgen und/oder in Abhängigkeit von einer Identität des Smartphones des Benutzers erfolgen. Derart kann sichergestellt werden, dass verschiedene erzeugte Steuerdaten verschiedene Werte aufweisen.

Es wäre möglich, dass das Verfahren umfasst: Validieren von optischen Eigenschaften der ersten Bilddaten und / oder zweiten Bilddaten basierend auf den Steuerdaten. Z.B. kann das Validieren der optischen Eigenschaften umfassen: Bestimmen eines Helligkeits-Histogramms für die ersten und/oder zweiten Bilddaten und Korrelieren des bestimmten Helligkeits-Histogramms mit Belichtungsparametern der Steuerdaten. Es wäre möglich, dass das Verfahren umfasst: Bestimmen eines Bildrauschens für die ersten und/oder zweiten Bilddaten und Korrelieren des bestimmten Bildrauschens mit Belichtungsparametern der Steuerdaten. Z.B. können die ersten und/oder zweiten Bilddaten die Belichtungsparameter und/oder einen Indikator der Blitzfunktion in elektronisch lesbarer Form beinhalten. Dann können diese mit den auf dem Server erzeugten Steuerdaten verglichen werden. So kann durch das Vorgeben der Bildparameter, mit denen das Smartphone 110 die ersten und/oder zweiten Bilddaten erfasst, vermieden werden, dass vorgefertigte erste und zweite Bilddaten im Rahmen des gegenwärtig diskutierten Verfahrens zum Identifizieren des Benutzers an den Server 101 übertragen werden.

Nachfolgend werden in Bezug auf die Fig. 11 weitere Details zu den ersten Bilddaten 301 erläutert. In FIG. 11 sind die ersten Bilddaten 301 dargestellt. Die ersten Bilddaten 301 bilden das Identifizierungs-Dokument 200 ab. Insbesondere beinhalten die ersten Bilddaten 301 drei Bilder 301-1, 301-2, 301-3, welche das Identifizierungs-Dokument 200 aus unterschiedlichen Perspektiven und Abständen abbilden. Darüber hinaus beinhalten zwei Bilder 301-2, 301-3 der ersten Bilddaten 301 Validierungsinformation 310, in der in FIG. 3 dargestellten Ausführungsform in der Form eines semi-transparent als Wasserzeichen überlagerten maschinenlesbaren Musters. Die Validierungsinformation 310 ist also auf die Bilder 301-2, 301-3 aufgeprägt. Weiterhin beinhalten die ersten Bilddaten 301 Meta-Daten 303, die z.B. umfassen: einen Zeitpunkt des Erfassens der Bilder 301-1, 301-2, 301-3, einen Ort des Erfassens der Bilder und eine ID des Smartphones, mit dem die Bilder 301-1, 301-2, 301-3 erfasst wurde. Zum Beispiel kann der Ort, wie er in den Meta-Daten 303 spezifiziert ist, einen Längen- und/oder Breitengrad spezifizieren.

Damit die Validierungsinformation 310 in den ersten Bilddaten 301 beinhaltet werden kann, können z.B. entsprechende Validierungsdaten auf dem Server 101 erzeugt werden und an das Smartphone 110 gesendet werden, bevor dieses die Bilddaten 301 erfasst. Dadurch, dass die Validierungsdaten und die daraus abgeleiteten, in den ersten Bilddaten 301 beinhalteten Validierungsinformationen 310 erst im Rahmen des Identifizierens erzeugt werden, d. h. in einem engen zeitlichen Kontext erzeugt werden, kann eine Aktualität der ersten Bilddaten 301 sichergestellt werden. Insbesondere kann vermieden werden, dass der Benutzer vorgefertigte erste Bilddaten 301 verwendet.

Weiterhin ist es möglich, Steuerdaten auf dem Server 101 zu erzeugen und diese an das Smartphone 110 zu senden. Die Steuerdaten können das Smartphone 110 instruieren, die ersten Bilddaten 301 mit einer bestimmten Abfolge von Bildparametern zu erfassen, so wie z.B. Anzahl von Bildern, Belichtungsparametern, Blitzfunktion, und Bildauflösung festlegen. Im Fall der FIG. 11 wurde mittels der Steuerdaten festgelegt, dass eine Anzahl von drei Bildern 301-1, 301-2, 301-3 erfasst werden soll. Es ist z.B. möglich, dass das erste Bild 301-1 eine Überbelichtung von z.B. zwei Blendenstufen aufweist, das zweite Bild 301-2 eine Unterbelichtung von zwei Blendenstufen aufweist und das dritte Bild 301-3 eine Normalbelichtung mit zusätzlich ausgelöstem Blitz aufweist. Dies ist rein illustrativ und nicht beschränkend. Eine andere Wahl und Kombination von Bildparametern ist möglich. Durch das Validieren der Bildparameter mittels der Steuerdaten ist es insbesondere möglich, zu vermeiden, dass der Benutzer vorgefertigte erste Bilddaten 301 für die Identifizierung verwendet. Es kann nämlich möglich sein, im Rahmen des Identifizierens auf dem Server 101 zu überprüfen bzw. zu validieren, ob die Bilder 301-1, 301-2, 301-3 der ersten Bilddaten optische Eigenschaften aufweisen, die durch die Bildparameter charakterisiert sind.

In dem Szenario, wie es in Bezug auf die FIG. 11 diskutiert wird, wurden weiterhin im Rahmen der Validierungsdaten an den Benutzer Befehle übertragen, mit welcher Position und Entfernung die Bilder 301-1, 301-2, 301-3 des Identifizierungs-Dokuments 200 zu erfassen sind. Dies kann zum Beispiel im Rahmen eines Videochats erfolgen; der Befehl könnte z.B. lauten "Hin- und Herkippen des Identifizierungs-Dokuments 200". Der Befehl könnte eine Sprachanweisung umfassen und / oder eine Bildanweisung, etwa in Form eines Piktogramms, umfassen. Deshalb weisen die Bilder 301-1, 301-2, 301-3 unterschiedliche Perspektiven des Identifizierungs-Dokuments 200 auf. Diese unterschiedlichen Perspektiven können als implizit in den Bilderdaten 301 beinhaltete Validierungsinformation basierend auf den Validierungsdaten validiert werden.

Obenstehend wurden in Bezug auf die FIG. 11 Techniken im Zusammenhang mit den ersten Bilddaten 301 erläutert. Es sollte jedoch verstanden werden, dass alternativ oder zusätzlich entsprechende Techniken auch im Zusammenhang mit den zweiten Bilddaten (in Fig. 11 nicht dargestellt) analog angewendet werden können. Insbesondere kann es alternativ oder zusätzlich möglich sein, Validierungsinformation 310 in den zweiten Bilddaten zu beinhalten. Die Steuerdaten können auch in Bezug auf die zweiten Bilddaten angewendet werden.

Mittels geeigneter Techniken werden im Rahmen des Identifizierens die Identifizierungsinformation 201 des Identifizierungs-Dokuments 200 aus den ersten Bilddaten 301 bestimmt, etwa mittels Texterkennung. Außerdem wird das Lichtbild 202 des Identifizierungs-Dokuments 200 mit der Gesichtspartie des Benutzers verglichen, was anhand der ersten Bilddaten 301 und zweiten Bilddaten möglich ist. Bei einer ausreichend guten Übereinstimmung zwischen dem Lichtbild 202 und der Gesichtspartie, kann angenommen werden, dass das Identifizierungs-Dokument 200 tatsächlich dem Benutzer gehört und dieser durch die Identifizierungsinformation 201 identifiziert ist.

Darüber hinaus kann durch das Vergleichen der ersten und zweiten Bilddaten zum Bestimmen der Ähnlichkeit ein vergleichsweise sicheres Identifizieren ermöglicht werden. Es werden nachfolgend Szenarien beschrieben, welche eine Sicherheit des Identifizierens zusätzlich fördern können.

Das Verfahren kann z.B. weiterhin umfassen: Erzeugen der Validierungsdaten auf dem Server 101 und Senden der Validierungsdaten von dem Server 101 an das Smartphone. Die Validierungsdaten können es dem Smartphone ermöglichen, zusätzliche Validierungsinformation 310 in den ersten Bilddaten und/oder in den zweiten Bilddaten zu beinhalten. Das Identifizieren kann weiterhin das Bestimmen der Validierungsinformation 310 aus den ersten Bilddaten 301 und/oder aus den zweiten Bilddaten umfassen und das Validieren der bestimmten Validierungsinformation 310 anhand der erzeugten Validierungsdaten.

Es ist möglich, dass das Erzeugen der Validierungsdaten auf dem Server 101 umfasst: Berücksichtigen von Zufallsergebnissen und/oder Berücksichtigen einer Uhrzeit des Erzeugens und/oder Berücksichtigen einer Identifizierung des Smartphones 110 des Benutzers. Solche Techniken können es erlauben, dass unterschiedlich erzeugte Validierungsdaten unterschiedliche Werte aufweisen. Derart kann es möglich sein, dass die konkrete Form der Validierungsdaten abhängig von dem konkreten Vorgang des Identifizierens des Benutzers ist. Z.B. können validierte Validierungsinformationen 310 für eine Echtheit der ersten Bilddaten 301 und/oder zweiten Bilddaten indikativ sein. Fälschungen oder Täuschungen können vermieden werden.

Durch das Erzeugen der Validierungsdaten auf dem Server 101 und das anschließende Validieren der bestimmten Validierungsinformation 310 anhand der erzeugten Validierungsdaten kann z.B. sichergestellt werden, dass ein enger zeitlicher Zusammenhang zwischen dem Erzeugen der ersten Bilddaten 301 und zweiten Bilddaten und dem Erzeugen der Validierungsdaten besteht. Zum Beispiel kann nämlich das Erzeugen der Validierungsdaten mittels einer proprietären Technik und/oder mittels zufällig erzeugten Anteilen (Zufallsgenerator) geschehen, sodass es nicht oder nur eingeschränkt möglich ist, dass vorab gefertigte Bilddaten, d. h. Bilddaten, die vor dem Erzeugen der Validierungsdaten erzeugt wurden, verwendet werden. In anderen Worten können die Validierungsdaten einen bestimmten Erzeugungszeitpunkt und/oder eine bestimmte Lebensdauer aufweisen, und es kann durch das Erzeugen und Verwenden der Validierungsdaten sichergestellt werden, dass die Bilddaten nach dem Erzeugungszeitpunkt der Validierungsdaten bzw. innerhalb der Lebensdauer der Validierungsdaten erstellt wurden.

Die Validierungsinformation 310 kann mindestens eines der folgenden Elemente umfassen: ein Wasserzeichen, das den ersten Bilddaten und/oder den zweiten Bilddaten aufgeprägt ist; und/oder einen alphanumerischen Code, der in den ersten Bilddaten und/oder den zweiten Bilddaten abgebildet ist; und/oder eine Position und/oder Entfernung einer die Bilddaten erfassenden Kamera zu dem Identifizierungs-Dokument und/oder zu der Gesichtspartie; und/oder einen alphanumerischen Code, der in den ersten Bilddaten und/oder den zweiten Bilddaten abgebildet ist und der einen Zeitpunkt oder eine Zeitspanne beinhaltet.

Es ist möglich, die Validierungsinformation automatisch, z.B. mittels einfacher Bildbearbeitungs-Techniken, in den ersten Bilddaten und / oder in den zweiten Bilddaten zu beinhalten.

Das Wasserzeichen kann z.B. eine semitransparent überlagerte Ebene (engl. layer) der ersten und/oder zweiten Bilddaten sein. Das Wasserzeichen kann z.B. einen alphanumerischen Code und/oder ein maschinenlesbares Muster beinhalten. Letztere können z.B. als die Validierungsinformation aus den ersten und/oder zweiten Bilddaten bestimmt werden und mit den Validierungsdaten verglichen werden. Der alphanumerische Code und / oder das maschinenlesbare Muster können den ersten und/oder zweiten Bilddaten überlagert werden.

Im Allgemeinen können die ersten Bilddaten 301 und / oder die zweiten Bilddaten die Validierungsinformation auch implizit beinhalten. Es ist etwa möglich, dass die Validierungsdaten eine Anweisung an den Benutzer beinhalten, auf welche Art und Weise, d. h. unter welcher Position und/oder Entfernung, die ersten und/oder zweiten Bilddaten das Identifizierungs-Dokument und / oder die Gesichtspartie abbilden sollen; d.h. wie die ersten und / oder zweiten Bilddaten mittels des Smartphones erfasst werden sollen. Diesbezüglich wäre z.B. eine mögliche, rein exemplarisch und nicht limitierende Form der Validierungsdaten: "Abstand von 10-20 cm unter einer Perspektive von links oben". Eine solche Anweisung könnte zum Beispiel im Rahmen eines Videochats gegeben werden. In einem solchen Szenario können die ersten Bilddaten 301 und/oder zweiten Bilddaten die zugehörige Validierungsinformation 310 implizit beinhalten, d. h. zum Beispiel in Form der perspektivischen Eigenschaften der in den ersten und/oder zweiten Bilddaten abgebildeten Elemente.

Entsprechend wäre es möglich, dass der Benutzer basierend auf den Validierungsdaten aufgefordert wird, die Validierungsinformation 310 - etwa einen bestimmten alphanumerischen Code oder ein bestimmtes Muster - aufzuschreiben und in den ersten Bilddaten und/oder den zweiten Bilddaten zu beinhalten. Dies kann dadurch geschehen, dass der Benutzer die aufgeschriebene Validierungsinformation, etwa auf einem Zettel oder einem Blatt Papier, beim Erfassen der ersten Bilddaten und/oder der zweiten Bilddaten mit in einem von den ersten und / oder zweiten Bilddaten abgebildetem Gesichtsfeld positioniert.

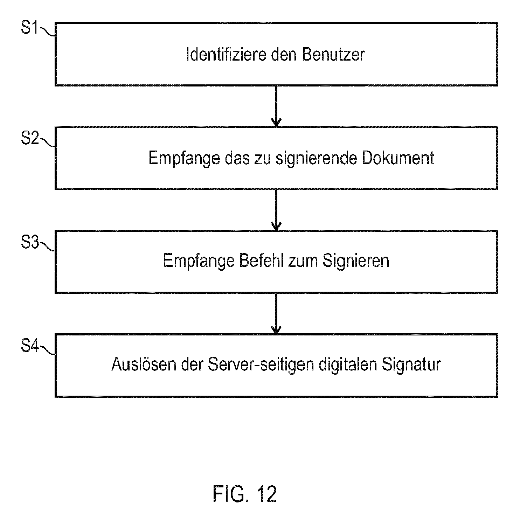

In Fig. 12 ist ein Flussdiagramm gemäß verschiedene Aspekte der vorliegenden Erfindung illustriert.

Zunächst erfolgt das Identifizieren des Benutzers (S1).

Das Identifizieren kann z.B. das Empfangen der ersten Bilddaten von dem Smartphone 110 des Benutzers auf dem Server 110 umfassen. Die ersten Bilddaten 301 bilden das Identifizierungs-Dokument 200 mit dem Lichtbild 202 des Benutzers ab. Das Identifizieren umfasst weiterhin das Empfangen von zweiten Bilddaten von dem Smartphone 110 des Benutzers auf dem Server 101, wobei die zweiten Bilddaten eine Gesichtspartie des Benutzers abbilden. Das Identifizieren umfasst weiterhin das Vergleichen der ersten Bilddaten 301 mit den zweiten Bilddaten umfasst, um eine Ähnlichkeit des Lichtbilds des Benutzers aus den ersten Bilddaten mit der Gesichtspartie des Benutzers aus den zweiten Bilddaten zu bestimmen. Das Identifizieren umfasst weiterhin das Bestimmen der Identifizierungsinformation 201, zum Beispiel anhand des in den ersten Bilddaten 301 abgebildeten Identifizierungs-Dokuments 200. Es Smartphone 110 des Benutzers empfangen wird, zum Beispiel in maschinenlesbarer Form. Alternativ oder zusätzlich wäre es auch möglich, dass die Identifizierungsinformation von dem weiteren Server 202 empfangen wird.

Dann wird die Identifizierungsinformation 201 validiert. Zum Beispiel kann die Identifizierungsinformation 201 validiert werden, wenn die Gesichtspartie des Benutzers eine hohe Ähnlichkeit mit dem Lichtbild des Benutzers aus den ersten Bilddaten 301 aufweist; alternativ oder zusätzlich könnte die Identifizierungsinformation 201 validiert werden, wenn die Identifizierungsinformation 201, die in digitaler Form auf dem Server 110 von dem Smartphone 110 empfangen wird, übereinstimmt mit der Identifizierungsinformation 201, die aus den ersten Bilddaten 301 bestimmt wird; alternativ oder zusätzlich könnte die Identifizierungsinformation 201 validiert werden, wenn die Identifizierungsinformation 201, die in digitaler Form auf dem Server 101 von dem Smartphone 110 empfangen wird, übereinstimmt mit der Identifizierungsinformation 201, die in digitaler Form auf dem Server 110 von dem weiteren Server 102 empfangen wird.

Das Identifizieren kann weiterhin mindestens einen der folgenden Schritte umfassen: Verifizieren von Integritätsmerkmalen des Identifizierungs-Dokuments 200 aus den ersten Bilddaten 301, wobei die Integritätsmerkmale Prüfsummen 203 und/oder Wasserzeichen und/oder Hologramm-Abbildungen und/oder biometrische Daten beinhalten; und Verifizieren von Meta-Daten, die mit den ersten Bilddaten und/oder mit den zweiten Bilddaten empfangen werden, wobei die Meta-Daten einen Aufnahmezeitpunkt der ersten Bilddaten 301 und/oder einen Aufnahmezeitpunkt der zweiten Bilddaten und/oder eine Identifikation des Smartphones 110 und/oder eine Aufnahmeposition der ersten Bilddaten 301 und/oder eine Aufnahmeposition der zweiten Bilddaten umfassen. Das Validieren der Identifizierungsinformation 201 kann weiterhin von solchen voranstehend beschriebenen Parametern abhängen.

Zum Beispiel könnten im Rahmen des Validierens der Identifizierungsinformation 201 ein oder mehrere Steuernachrichten von dem Smartphone 110 an den Server 101 übertragen werden. Diese Steuernachrichten können Informationen beinhalten, die für die Entscheidung wesentlich sind, ob die Identifizierungsinformation 201 validiert werden soll oder nicht. Im Allgemeinen können die Steuernachrichten zumindest Teile der Identifizierungsinformation 201 indizieren. Zum Beispiel könnten die Steuernachrichten einen Gehaltsnachweis, einen Adressnachweis oder andere Nachweisdokumente in Bezug auf die Identifizierungsinformation 201 des Benutzers betreffen. Im Allgemeinen können also zumindest Teile der Identifizierungsinformation 201 in anderer Form als den ersten Bilddaten 301 übertragen werden.

Anschließend wird das zu signierende Dokument 150 empfangen (S2). Zum Beispiel könnten im Rahmen von S2 mehrere zu signierende Dokumente 150 empfangen werden. Das Übertragen des zu signierenden Dokuments 150 kann auf verschiedenste Arten und Weisen geschehen. Zum Beispiel kann eine Programmierschnittstelle (API) eingesetzt werden. Es wäre auch möglich, dass ein manueller Upload durchgeführt wird. Es wäre auch möglich, dass das zu signierende Dokument 150 vom Auftraggeber, d.h. dem weiteren Server 103, bezogen wird. Es wäre auch möglich, dass das zu signierende Dokument 150 manuell von dem weiteren Server 103 auf den Server 101 geuploaded wird, zum Beispiel durch einen weiteren Benutzer. Es wäre auch möglich, dass das zu signierende Dokument 150 per E-Mail übertragen wird.

Es wäre im Allgemeinen auch möglich, dass S2 vor S1 ausgeführt wird, also zunächst das zu signierende Dokument 150 empfangen wird und anschließend der Benutzer identifiziert wird.

Anschließend wird der Befehl zum Signieren empfangen (S3). Zum Beispiel kann der Befehl zum Signieren einen gesprochenen Befehl des Benutzers umfassen. Der Befehl zum Signieren könnte zum Beispiel auch das Senden einer Steuernachricht von dem Smartphone 110 an den Server 101 umfassen; die Steuernachricht könnte zum Beispiel das Betätigen eines Befehlsknopf durch den Benutzer indizieren.

Im Allgemeinen wäre es möglich, dass die ersten Bilddaten 301 und der Befehl zum Signieren, zum Beispiel in Form des Sprachbefehls als Tondatei, im Rahmen eines durchgängigen Videochats übertragen werden; derart kann sichergestellt werden, dass derjenige Benutzer, für den in Schritt S1 die Identifizierungsinformation 201 validiert wurde, übereinstimmt mit demjenigen Benutzer, der in Schritt S3 den Befehl zum Signieren sendet.

Anschließend wird in Schritt S4 die Server-seitige digitale Signatur des Dokuments 150 ausgelöst. Optional kann das signierte Dokument 151 von dem Server 101 an das Smartphone 110 gesendet werden.

Im Allgemeinen können die Schritte S1-S4 in einem zeitlich zusammenhängenden Prozess integriert werden. Insbesondere kann es möglich sein, dass die Identifizierung in S1, sowie das Durchführen der digitalen Signatur in S2 bzw. S3 in einem zusammenhängenden Videochat durchgeführt werden. Es wäre aber auch möglich, dass der Prozess zum Beispiel nach S1 unterbrochen wird und später wieder aufgenommen wird.

Zur Steigerung der Beweiskraft der digitalen Signatur könnte im Anschluss an Schritt S4 zum Beispiel eine Protokolldatei abgespeichert werden, welche Eigenschaften des vorangegangenen Identifizierungs- und Signaturprozesses indiziert. Zum Beispiel könnte die Protokolldatei die Bilddaten 301, die das Identifizierungs-Dokument abbilden, umfassen. Die Protokolldatei könnte auch die weiteren Bilddaten, die die Gesichtspartie des Benutzers abbilden, umfassen. Die Protokolldatei könnte auch die Identifizierungsinformation 201 umfassen. Die Protokolldatei könnte auch das signierte Dokument 151 und/oder das zu signierende Dokument 150 umfassen. Es wäre auch möglich, dass die Protokolldatei eine Aufzeichnung des Befehls des Benutzers zum Signieren umfasst; dies kann insbesondere der Fall sein, wenn der Befehl zum Signieren eine Sprachanweisung im Rahmen einer Tondatei umfasst. Es wäre auch möglich, dass die Protokolldatei eine Benutzerkennung des Benutzers, zum Beispiel ein Passwort etc. umfasst. Es wäre auch möglich, dass die Protokolldatei eine IP-Adresse des Smartphones 110 umfasst. Die Protokolldatei könnte zum Beispiel auch einen Zeitstempel, der indikativ für den Identifizierungs-und Signaturprozess ist umfassen. Es wäre auch möglich, dass die Protokolldatei eine Geo-Position des Smartphones 110 umfasst.

Zusammenfassend wurden voranstehend also Techniken illustriert, die eine Verknüpfung einer online-Identifizierung, wie zum Beispiel einer Online-Video-Identifizierung, mit einer digitalen Signatur eines Dokuments ermöglichen. Die Online-Identifizierung bietet hierbei eine äquivalente Sicherheit gegenüber Fälschung wie zum Beispiel eine Identifizierung unter Anwesenden. Gemäß den voranstehend beschriebenen Techniken kann einem Anbieter der Signatur-Dienstleistung das zu signierende Dokument übermittelt werden, zum Beispiel über eine Schnittstelle/API oder über einen Datei-Upload. Im Falle einer Video-Identifizierung kann anschließend ein Videochat mit einem Agenten beginnen. Der Agent kann zum Beispiel die Vorder- und Rückseite eines Identifizierungs-Dokuments, etwa eines Personalausweises, kontrollieren. Eine solche Kontrolle kann Integritätsmerkmale des Identifizierungs-Dokuments berücksichtigen. Zum Beispiel könnte der Agent Hologramme, die auf dem Identifizierungs-Dokument vorgehalten sind, auf Anwesenheit und optional Echtheit überprüfen. Dann kann der Agent das Gesicht des Benutzers mit einem Lichtbild des Identifizierungs-Dokuments abgleichen. Es kann ferner Identifizierungsinformation zum Beispiel aus dem Identifizierungs-Dokument und/oder in einer gesonderten Datenübertragung ermittelt werden. Diese Identifizierungsinformation kann wiederum die Identität des Benutzers indizieren. Derart kann es also möglich sein, die Identität des Benutzers sicher und eindeutig festzustellen. Nach der Feststellung der Identität kann das zu signierende Dokument bzw. Information, die charakteristisch für das zu signierende Dokument ist, dem Benutzer angezeigt werden. Der Benutzer bestätigt, dass er das zu signierende Dokument tatsächlich signieren will - der Benutzer kann also den Signaturvorgang genehmigen. Dazu kann ein entsprechender Befehl von dem Smartphone des Benutzers an den Server übertragen werden. Wenn der Benutzer die Signaturerstellung bestätigt hat, erfolgt das digitale Signieren des Dokuments. Das Dokument kann archiviert werden, dem Benutzer zur Verfügung gestellt werden, und/oder einem Auftraggeber zur Verfügung gestellt werden.

Mittels solcher Techniken kann also eine digitale Signatur erfolgen, die keine spezielle Hardware seitens des Benutzers erfordert. Insbesondere kann es möglich sein, dass seitens des Benutzers nur herkömmliche Consumer Hardware, wie zum Beispiel ein PC, ein Tablet PC, ein Smartphone, NFC, etc. benötigt wird. Solche Techniken können auch besonders einfach durchgeführt werden; insbesondere ist es nicht erforderlich, dass der Benutzer gesondertes Wissen und/oder besondere Software einbringt. Der Benutzer muss lediglich ein herkömmliches Identifizierungs-Dokument vorhalten. Es ist nicht erforderlich, dass der Benutzer an einer Kontrollstelle persönlich vorspricht; das digitale Signieren kann in einer Remote-Anwendung erfolgen. Die voranstehend beschriebenen Techniken können auch für das digitale Signieren von weiteren Dokumenten verwendet werden. Dabei kann es in verschiedenen Szenarien entbehrlich sein, dass die Identifizierungsinformation erneut validiert wird; vielmehr kann es ausreichend sein, wenn sich der Benutzer zum Beispiel Passwort-basiert, basierend auf biometrischen Daten, und/oder in einer Multi-Faktor Authentifizierung authentifiziert.

Selbstverständlich können die Merkmale der vorab beschriebenen Ausführungsformen und Aspekte der Erfindung miteinander kombiniert werden. Insbesondere können die Merkmale nicht nur in den beschriebenen Kombinationen, sondern auch in anderen Kombinationen oder für sich genommen verwendet werden, ohne das Gebiet der Erfindung zu verlassen.

Voranstehend wurden verschiedene Aspekte der Erfindung zum Beispiel in Bezug auf einen Benutzer, der ein oder mehrere Endgeräte einsetzt - insbesondere ein Smartphone -, beschrieben. Im Allgemeinen ist es auch möglich, dass entsprechende Techniken dahingehend erweitert werden, dass mehrere Benutzer zumindest teilweise parallel den Identifizierungs-und Signaturprozess durchführen; dadurch kann es möglich sein, dass mehrere Vertragsparteien zumindest teilweise parallel ein und dasselbe zu signierende Dokument digital signieren.

Voranstehend wurden die Techniken insbesondere in Bezug auf ein Smartphone erläutert. Im Allgemeinen können unterschiedlichste Typen von Endgeräten eingesetzt werden, z.B. auch in Kombination. Z.B. könnte auch ein Laptop oder PC, ein Fernseher oder ein Tablet-PC eingesetzt werden.

## Patentansprüche

1. Verfahren zum digitalen Signieren eines Dokuments (150), umfassend:
- Empfangen von Bilddaten (301-1 - 301-3) von mindestens einem Endgerät (110) eines Benutzers,
wobei die Bilddaten (301-1 - 301-3) ein Identifizierungs-Dokument (200) mit einem Lichtbild (202) des Benutzers abbilden,
- Validieren von Identifizierungsinformation (201) des Benutzers basierend auf den Bilddaten (301-1 - 301-3),
- Bereitstellen von mindestens einem zu signierenden Dokument (150),
- Auslösen einer Benutzer-spezifischen Signaturerstellung einer digitalen Signatur (161) des mindestens einen zu signierenden Dokuments (150) basierend auf der validierten Identifizierungsinformation (201).

2. Verfahren nach Anspruch 1, weiterhin umfassend:
- Empfangen mindestens eines Befehls (A4, B4, C5, D4, D6, F4) zum Signieren von dem mindestens einen Endgerät (110) des Benutzers,
wobei das Auslösen der Signaturerstellung (161) in Reaktion auf das Empfangen des mindestens einen Befehls (A4, B4, C5) zum Signieren geschieht.

3. Verfahren nach Anspruch 2,
wobei mehrere Befehle (A4, B4, C5, D4, D6, F4) zum Signieren von dem mindestens einen Endgerät (110) des Benutzers empfangen werden,
wobei jeweils eine Benutzer-spezifische Signaturerstellung der digitalen Signatur, die sich zumindest auf einen Teil des mindestens einen zu signierenden Dokuments (150) bezieht, in Reaktion auf das jeweilige Empfangen eines der mehreren Befehle (A4, B4, C5, D4, D6, F4) zum Signieren ausgelöst wird.

4. Verfahren nach einem der voranstehenden Ansprüche,
wobei die digitale Signatur (161) auf einem Zertifikat (160) basiert,
wobei das Verfahren weiterhin umfasst:
- basierend auf der Identifizierungsinformation (201) des Benutzers: Erstellen des Zertifikats (160), das Benutzer-spezifisch für den Benutzer ist.

5. Verfahren nach Anspruch 4,
wobei das Zertifikat (160) Dokument-spezifisch für das zu signierende Dokument ist,
wobei das Zertifikat (160) optional eine Prüfsumme des zu signierenden Dokuments (150) umfasst.

6. Verfahren nach Anspruch 4 oder 5,
- Bereitstellen von mindestens einem weiteren zu signierenden Dokuments (150),
- Authentifizieren des Benutzers,
- Empfangen eines weiteren Befehls (A4, B4, C5, D4, D6, F4) zum Signieren von dem mindestens einen Endgerät (110) des Benutzers,
- in Reaktion auf das Empfangen des weiteren Befehls zum Signieren, Auslösen der Benutzer-spezifischen Signaturerstellung der digitalen Signatur des mindestens einen weiteren zu signierenden Dokuments basierend auf dem Zertifikat (160) oder einem weiteren Zertifikat (160),
wobei das Authentifizieren des Benutzers optional zumindest eines der folgenden Elemente umfasst: eine Passwort-basierte Authentifizierung; eine biometrische Authentifizierung; eine SIM-Nummer-basierte Authentifizierung; eine Geo-Position-basierte Authentifizierung; eine IP-basierte Authentifizierung; und / oder eine Multi-Faktor Authentifizierung.

7. Verfahren nach einem der Ansprüche 1 - 3,
wobei die digitale Signatur (161) auf einem Zertifikat (160) basiert,
wobei das Verfahren weiterhin umfasst:
- Empfangen des Zertifikats (160), wobei das Zertifikat (160) nicht spezifisch für das zu signierenden Dokuments (150) ist und spezifisch für den Benutzer ist,
wobei das Validieren der Identifizierungsinformation (201) weiterhin auf dem Zertifikat (160) basiert.

8. Verfahren nach einem der voranstehenden Ansprüche,
- Empfangen von weiteren Bilddaten (302-1 - 302-3) von dem mindestens einen Endgerät (110) des Benutzers,
wobei die weiteren Bilddaten (302-1 - 302-3) eine Gesichtspartie des Benutzers abbilden,
wobei das Validieren weiterhin auf den weiteren Bilddaten (302-1 - 302-3) basiert.

9. Verfahren nach einem der Ansprüche 2 oder 3,
wobei der mindestens eine Befehl (A4, B4, C5, D4, D6, F4) zum Signieren einen gesprochenen Befehl des Benutzers umfasst, der als Tondatei empfangen wird,
wobei die Bilddaten (301-1 - 301-3) und die Tondatei optional im Rahmen eines Videochats auf dem Server (101) empfangen werden.

10. Verfahren nach einem der voranstehenden Ansprüche, weiterhin umfassend:
- Senden von Information (C4), die indikativ für das zu signierende Dokument (150) ist, an das mindestens eine Endgerät (110) des Benutzers,
wobei die Information (C4), die indikativ für das zu signierende Dokument (150) ist, optional eine Prüfsumme des zu signierenden Dokuments (150) umfasst.

11. Verfahren nach einem der voranstehenden Ansprüche, weiterhin umfassend:
- Abspeichern einer Protokolldatei die ausgewählt ist aus der Gruppe, die umfasst: die Bilddaten (301-1 - 301-3); weitere Bilddaten (302-1 - 302-3), die eine Gesichtspartie des Benutzers abbilden; das zu signierende Dokument (150); ein signierte Dokument (151); eine Aufzeichnung des Befehls (A4, B4, C5, D4, D6, F4) des Benutzers zum Signieren; eine Benutzerkennung des Benutzers; eine Internet Protocol Adresse des mindestens einen Endgeräts (110); einen Zeitstempel.

12. Verfahren nach einem der voranstehenden Ansprüche, weiterhin umfassend:
- Durchführen des Signierens des zu signierenden Dokuments (150), um ein signiertes Dokument (151) zu erhalten,
- Senden des signierten Dokuments.

13. Verfahren nach einem der voranstehenden Ansprüche,
wobei das Validieren der Identifizierungsinformation (201) weiterhin umfasst:
- Senden von zumindest Teilen der Identifizierungsinformation (201) an einen weiteren Server (103),
- Empfangen von Kontrolldaten von einem weiteren Server (103), wobei das Validieren auf den Kontrolldaten basiert.

14. Server (101), umfassend:
- einen Prozessor, der eingerichtet ist, um Bilddaten (301-1 - 301-3) von mindestens einem Endgerät (110) eines Benutzers über eine Schnittstelle (106) zu empfangen,
wobei die Bilddaten (301-1 -301-3) ein Identifizierungs-Dokument (200) mit einem Lichtbild (202) des Benutzers abbilden,
wobei der Prozessor (105) weiterhin eingerichtet ist, um Identifizierungsinformation (201) des Benutzers basierend auf den Bilddaten (301-1-301-3) zu validieren,
wobei der Prozessor (105) weiterhin eingerichtet ist, um eine Benutzer-spezifische Signaturerstellung einer digitalen Signatur (161) mindestens eines zu signierenden Dokuments (150) basierend auf der validierten Identifizierungsinformation (201) auszulösen.

15. Server (101) nach Anspruch 14,
wobei der Server (101) weiterhin eingerichtet ist, um ein Verfahren nach einem der Ansprüche 1 - 13 durchzuführen.
